# EUROPEAN PATENT SPECIFICATION

(11) **EP 2 899 687 B1**
(45) Date of publication and mention of the grant of the patent: **26.04.2017**
(21) Application number: 14802583.6
(22) Date of filing: 27.05.2014
(51) Int. Cl.: G06T 1/00, G06F 9/455, G06F 9/54, G06F 9/44, G06T 15/00

(54) **METHOD AND DEVICE FOR PROCESSING GRAPHICS DATA**
VERFAHREN UND VORRICHTUNG ZUR VERARBEITUNG VON GRAFIKDATEN
PROCÉDÉ ET DISPOSITIF DESTINÉS AU TRAITEMENT DE DONNÉES GRAPHIQUES

(30) Priority: 28.11.2013 CN 201310625375
(43) Date of publication of application: 29.07.2015
(73) Proprietor: Huawei Technologies Co., Ltd., Longgang District Shenzhen, Guangdong 518129 (CN)
(72) Inventor: SUN, Zhicheng, Shenzhen Guangdong 518129 (CN)
(74) Representative: Gill Jennings & Every LLP
(86) International application number: PCT/CN2014/078515
(87) International publication number: WO 2015/078156

(56) References cited:
- WO-A1-2009/085063
- CN-A- 1 805 354
- CN-A- 102 663 804
- CN-A- 103 294 439
- US-A1- 2009 268 754
- US-A1- 2012 084 517
- SEBASTIEN FREMAL ET AL: "Optimizing performance of batch of applications on cloud servers exploiting multiple GPUs", COMPLEX SYSTEMS (ICCS), 2012 INTERNATIONAL CONFERENCE ON, IEEE, 5 November 2012 (2012-11-05), pages 1-6, XP032328100, DOI: 10.1109/ICOCS.2012.6458590 ISBN: 978-1-4673-4764-8

## Description

### TECHNICAL FIELD

The present invention relates to the field of computer technologies, and in particular, to a graphics data processing method, apparatus, and system.

### BACKGROUND

A GPU (Graphic processing Unit, graphics processing unit) is a microprocessor that can perform graphics arithmetic in a personal computer, a workstation, a game console, or a mobile device (for example, a smartphone or a tablet computer). A GPU mainly performs floating-point arithmetic and parallel computing. A GPU virtualization technology is a technology that enables virtual machine instances running on a data center server to share one or more GPU processors to perform graphics arithmetic.

In GPU virtualization, a thin terminal is responsible for input of a mouse and a keyboard and output of a display. The thin terminal may remotely access a virtual desktop, and the virtual desktop may obtain a graphics processing instruction, so that the virtual desktop establishes a network connection to a GPU virtual rendering server. The virtual desktop creates a memory area that is used for packetizing instruction data, and the GPU virtual rendering server also creates a memory area that is used for depacketizing instruction data. The virtual desktop performs packetization on the graphics processing instruction to obtain an instruction data packet. The instruction data packet is transmitted to the GPU virtual rendering server by using a network. Then the GPU virtual rendering server performs depacketization and processing on the instruction data packet, and after the processing is complete, sends to-be-returned data to the virtual desktop by using the network.

For a 3D (Three Dimensions, three-dimensional) application program, for example, during a graphics drafting or modeling operating process, a large number of graphics processing instructions such as a vertex data instruction and a draw vertex instruction are generated. Transmission of the graphics processing instructions between the virtual desktop and the GPU virtual rendering server requires operations such as establishment of a network connection, creation of a memory area, layer-by-layer encapsulation of a message header, instruction data packetization, layer-by-layer decapsulation of a message header, and instruction data depacketization. Moreover, data that is obtained by the GPU virtual rendering server by performing rendering on the graphics processing instructions also needs to be transmitted to the virtual desktop by using the network. All graphics processing instructions and the data that is obtained after the rendering processing both need to be transmitted through a network transmission channel established between the virtual desktop and the GPU virtual rendering server, which generates a long transmission delay. As a result, a real-time response speed of graphics rendering is low, graphics processing performance is deteriorated, and bandwidth of the transmission channel is increased.

US2012/084517A1 relates to a mechanism for the creation of a shared memory aperture between modes in a parent and child partition is described. In particularly, it discloses that the VSC driver converts the MDL to a guest physical address descriptor list (GPADL) that describes the actual real system physical pages that the memory buffer has been allocated by the Hypervisor, and the VSP driver converts the GPADL it receives from VSC driver into a host OS MDL and locks the pages in system memory. The VSP uses the virtual address of the memory buffer that the shared memory transport channel library has reserved using a VirtualAlloc function and maps these reserved pages to the already allocated and locked system pages from the guest partition, thus sharing the memory.

### SUMMARY

Embodiments of the present invention provide a graphics data processing method, apparatus, and system to resolve a technical problem in the prior art that a long transmission delay is generated, a real-time response speed of graphics rendering is low, graphics processing performance is low, and bandwidth of a transmission channel is increased because all graphics processing instructions and data that is obtained after rendering processing need to be transmitted through the network transmission channel established between a virtual desktop and a GPU virtual rendering server.

A first aspect of the embodiments of the present invention provides a graphics data processing method, including:
obtaining, by a virtual rendering server, a system address of a shared memory, wherein the system address is a physical address, the shared memory is a memory of a physical machine and is created by the virtual client process and the virtual rendering server through negotiation, the virtual rendering server and the virtual client process are virtual machines that run on the physical machine;
mapping, by the virtual rendering server, the obtained system address of the shared memory to process address space of the virtual rendering server, to obtain a mapping address of the shared memory;
receiving, by the virtual rendering server, storage address information that is of graphics instruction data and is sent by the virtual client process, wherein the graphics instruction data is stored in the shared memory by the virtual client process;
accessing, by the virtual rendering server, the shared memory according to the mapping address of the shared memory, and obtaining the graphics instruction data from the shared memory according to the storage address information of the graphics instruction data; and
performing, by the virtual rendering server, rendering processing on the obtained graphics instruction data to obtain target display data, and sending the target display data to the virtual client process, wherein the target display data is graphics data.

In a possible implementation manner of the first aspect, the sending the target display data to the virtual client process includes:
storing, by the virtual rendering server, the target display data into the shared memory, and generating storage address information of the target display data; and
sending, by the virtual rendering server, the storage address information of the target display data to the virtual client process, so that the virtual client process obtains the target display data from the shared memory according to the storage address information of the target display data.

A second aspect of the embodiments of the present invention provides a graphics data processing method, including:
obtaining, by a virtual client process, a system address of a shared memory, wherein the system address is a physical address, the shared memory is a memory of a physical machine and is created by the virtual client process and a virtual rendering server through negotiation, the virtual client process and the virtual rendering server are virtual machines that run on the physical machine;
mapping, by the virtual client process, the obtained system address of the shared memory to process address space of the virtual client process, to obtain a mapping address of the shared memory, ;
when graphics instruction data is obtained, storing, by the virtual client process, the obtained graphics instruction data into the shared memory according to the obtained mapping address of the shared memory, so that the virtual rendering server obtains the graphics instruction data from the shared memory to perform rendering processing; and
obtaining, by the virtual client process, target display data that is obtained by the virtual rendering server by performing rendering processing on the graphics instruction data , wherein the target display data is graphics data.

In a first possible implementation manner of the second aspect, after the storing, by the virtual client process, the obtained graphics instruction data into the shared memory according to the obtained mapping address of the shared memory, the method includes:
generating, by the virtual client process, storage address information of the graphics instruction data; and
sending, by the virtual client process, the storage address information of the graphics instruction data to the virtual rendering server, so that the virtual rendering server obtains, according to the storage address information of the graphics instruction data, the graphics instruction data from the shared memory to perform rendering processing.

In a second possible implementation manner of the second aspect, the obtaining, by the virtual client process, target display data that is obtained by the rendering server by performing rendering processing on the graphics instruction data includes:
receiving, by the virtual client process, storage address information that is of the target display data and is sent by the virtual rendering server, where the storage address information of the target display data is storage address information of target display data that is generated by storing, by the virtual rendering server, the target display data into the shared memory; and
obtaining, by the virtual client process, the target display data from the shared memory according to the storage address information of the target display data.

A third aspect of the embodiments of the present invention provides a graphics data processing apparatus,
the apparatus includes a virtual rendering server, where the virtual rendering server includes an instruction address receiving module, an instruction data obtaining module, a data processing module, a system address obtaining unit and a mapping unit;
a system address obtaining unit, configured to obtain a system address of a shared memory, wherein the system address is a physical address, the shared memory is a memory of a physical machine and is created by a virtual client process and the virtual rendering server through negotiation, the virtual rendering server and the virtual client process are virtual machines that run on the physical machine;
a mapping unit, configured to map the system address that is of the shared memory and is obtained by the system address obtaining unit to process address space of the virtual rendering server, to obtain the mapping address of the shared memory
the instruction address receiving module is configured to receive storage address information that is of graphics instruction data and is sent by the virtual client process, wherein the graphics instruction data is stored in the shared memory by the virtual client process;
the instruction data obtaining module is configured to access the shared memory according to the mapping address of the shared memory and obtain the graphics instruction data from the shared memory according to the storage address information that is of the graphics instruction data and is received by the instruction address receiving module; and
the data processing module is configured to perform rendering processing on the graphics instruction data obtained by the instruction data obtaining module to obtain target display data, and send the target display data to the virtual client process , wherein the target display data is graphics data.

In a possible implementation manner of the third aspect, the data
processing module includes:
a target data storing unit, configured to store the target display data into the shared memory, and generate storage address information of the target display data; and
a target data address sending unit, configured to send the storage address information of the target display data to the virtual client process, so that the virtual client process obtains the target display data from the shared memory according to the storage address information of the target display data.

A fourth aspect of the embodiments of the present invention provides a graphics data processing apparatus, where the apparatus includes a virtual client process, where the virtual client process includes a shared memory address obtaining module, an instruction data storing module, a target data obtaining module, a system address obtaining unit and a mapping unit;
a system address obtaining unit, configured to obtain a system address of the shared memory, wherein the system address is a physical address, the shared memory is a memory of a physical machine and is created by the virtual client process and a virtual rendering server through negotiation, the virtual client process and the virtual rendering server are virtual machines that run on the physical machine;
a mapping unit, configured to map the system address that is of the shared memory and is obtained by the system address obtaining unit to process address space of the virtual client process, to obtain the mapping address of the shared memory;
the shared memory address obtaining module is configured to obtain a mapping address of the shared memory;
the instruction data storing module is configured to: when graphics instruction data is obtained, store the obtained graphics instruction data into the shared memory according to the mapping address that is of the shared memory and is obtained by the shared memory address obtaining module, so that the virtual rendering server obtains the graphics instruction data from the shared memory to perform rendering processing; and
the target data obtaining module is configured to obtain target display data that is obtained by the rendering server by performing rendering processing on the graphics instruction data, wherein the target display data is graphics data.

In a first possible implementation manner of the fourth aspect, the
virtual client process further includes:
an instruction address generating module, configured to generate storage address information of the graphics instruction data; and
an instruction address sending module, configured to send, to the virtual rendering server, the storage address information that is of the graphics instruction data and is generated by the instruction address generating module, so that the virtual rendering server obtains, according to the storage address information of the graphics instruction data, the graphics instruction data from the shared memory to perform rendering processing.

In a second possible implementation manner of the fourth aspect, the target data obtaining module includes:
a data address receiving unit, configured to receive storage address information that is of the target display data and is sent by the virtual rendering server, where the storage address information of the target display data is storage address information of target display data that is generated by storing, by the virtual rendering server, the target display data into the shared memory; and
a target data obtaining unit, configured to obtain the target display data from the shared memory according to the storage address information that is of the target display data and is received by the data address receiving unit.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a graphics data processing method according to a first embodiment of the present invention;
FIG. 2 is a flowchart of a graphics data processing method according to a second embodiment of the present invention;
FIG. 3 is a flowchart of a graphics data processing method according to a third embodiment of the present invention;
FIG. 4 is a flowchart of a graphics data processing method according to a fourth embodiment of the present invention;
FIG. 5A and FIG. 5B is a flowchart of a graphics data processing method according to a fifth embodiment of the present invention;
FIG. 6A and FIG. 6B is a flowchart of a graphics data processing method according to a sixth embodiment of the present invention;
FIG. 7A and FIG. 7B is a flowchart of a graphics data processing method according to a seventh embodiment of the present invention;
FIG. 8 is a schematic structural diagram of a graphics data processing apparatus according to a first embodiment of the present invention;
FIG. 9 is a schematic structural diagram of a virtual rendering server according to an embodiment of the present invention;
FIG. 10 is a schematic structural diagram of a graphics data processing apparatus according to a second embodiment of the present invention;
FIG. 11 is a schematic structural diagram of another virtual rendering server according to an embodiment of the present invention;
FIG. 12 is a schematic structural diagram of a graphics data processing apparatus according to a third embodiment of the present invention;
FIG. 13 is a schematic structural diagram of a virtual client process according to an embodiment of the present invention;
FIG. 14 is a schematic structural diagram of a graphics data processing apparatus according to a fourth embodiment of the present invention;
FIG. 15 is a schematic structural diagram of another virtual client process according to an embodiment of the present invention; and
FIG. 16 is a schematic structural diagram of a graphics data processing system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The embodiments of the present invention provide a graphics data processing method, apparatus, and system. In the embodiments of the present invention, graphics data includes but is not limited to graphics instruction data and target display data. In an optional implementation manner, a virtual client process and a virtual rendering server may create a shared memory through negotiation. The virtual client process may send storage address information of graphics instruction data to the virtual rendering server, so that the virtual rendering server may obtain the graphics instruction data from the shared memory according to the storage address information of the graphics instruction data. The virtual rendering server may perform rendering processing on the obtained graphics instruction data to obtain target display data. In an optional implementation manner, a virtual rendering server may further send storage address information of target display data to a virtual client process, so that the virtual client process may obtain the target display data from a shared memory according to the storage address information of the target display data.

A graphics data processing system provided by an embodiment of the present invention may include a virtual rendering server, a virtual client process, and a shared memory that is created by the virtual rendering server and the virtual client process through negotiation. The virtual rendering server and the virtual client process are virtual machines that run on a same physical machine. Specifically, the physical machine may be a physical host that includes a GPU. Multiple virtual rendering servers may be bound to one physical host. In an optional implementation manner, one virtual rendering server may correspond to multiple virtual client processes. In the embodiments of the present invention, a virtual rendering server includes but is not limited to a GPU virtual rendering server, and a virtual client process includes but is not limited to a virtual graphics desktop. Further, optionally, a graphics data processing system provided by an embodiment of the present invention may further include a thin terminal. The thin terminal is responsible for input of a mouse and a keyboard and output of a display. The thin terminal may remotely access a virtual client process. In the embodiments of the present invention, the thin terminal is used to receive graphics instruction data entered by a user, and display graphics display data that is obtained by the virtual client process after processing is performed on target display data.

In an optional implementation manner, in the embodiments of the present invention, graphics instruction data may include but is not limited to graphics processing instructions such as vertex data and draw vertex instructions that are generated by a 3D application program, for example, during a graphics drafting or modeling operating process. These graphics processing instructions include, for example, instructions such as a glGet* return type instruction and glSwapBuffer that need to be instantly sent, a vertex array type instruction that carries a pointer parameter, and an aggregatable packetization type instruction. A graphics data processing solution in the embodiments of the present invention may be applied to graphics drafting, modeling, or the like that is performed by using a 3D application program.

By using the embodiments of the present invention, it can be implemented that, graphics instruction data or target display data or both do not need to be directly transmitted through a network transmission channel between a virtual client process and a virtual rendering server. This shortens a transmission delay, decreases bandwidth of the transmission channel, and improves graphics processing performance. The following uses specific embodiments for description.

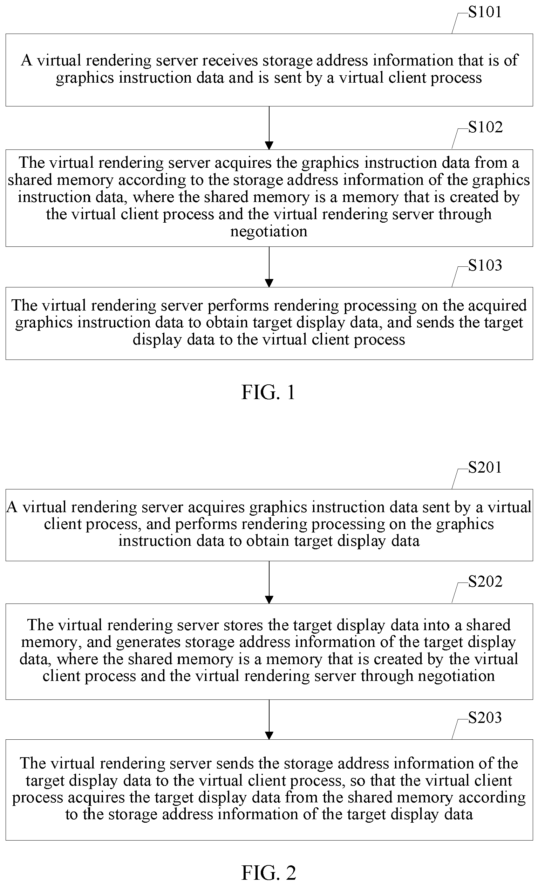

FIG. 1 is a flowchart of a graphics data processing method provided by a first embodiment of the present invention. In the graphics data processing method shown in FIG. 1, a virtual rendering server is used as an execution body for description. As shown in the figure, a procedure in this embodiment includes steps S101-S103.
S101: The virtual rendering server receives storage address information that is of graphics instruction data and is sent by a virtual client process.
S102: The virtual rendering server obtains the graphics instruction data from a shared memory according to the storage address information of the graphics instruction data, where the shared memory is a memory that is created by the virtual client process and the virtual rendering server through negotiation.
S103: The virtual rendering server performs rendering processing on the obtained graphics instruction data to obtain target display data, and sends the target display data to the virtual client process.

Further, optionally, before step S101, this embodiment of the present invention may further include the following step:

The virtual rendering server creates the shared memory on a physical machine through negotiation with the virtual client process, and generates a mapping address of the shared memory, where the virtual rendering server and the virtual client process are virtual machines that run on a same physical machine.

In an optional implementation manner, the virtual rendering server creates the shared memory on a physical machine through negotiation with the virtual client process. Specifically, a memory is applied for in the physical machine and is used as the shared memory. The virtual rendering server obtains a system address of the shared memory. Then the virtual rendering server maps the obtained system address of the shared memory to process address space of the virtual rendering server, to obtain the mapping address of the shared memory, and further generates the mapping address of the shared memory. The system address of the shared memory is an absolute physical address of an operating system, that is, the virtual rendering server cannot directly access the system address of the shared memory. The virtual rendering server may map the system address of the shared memory to the process address space of the virtual rendering server, for example, a register of the virtual rendering server. The virtual rendering server may directly access the mapping address of the shared memory, so that the virtual rendering server may access the shared memory according to the mapping address of the shared memory, thereby reading data from or writing data into the shared memory.

In an optional implementation manner, in step S101, the virtual rendering server receives the storage address information that is of the graphics instruction data and is sent by the virtual client process. Specifically, when the virtual client process receives an instruction that is input from a thin terminal, the instruction that is input at the user end triggers an application program in the virtual client process to generate the graphics instruction data. Then the virtual client process obtains the graphics instruction data, stores the graphics instruction data into the shared memory, and generates the storage address information of the graphics instruction data. The virtual client process sends the storage address information of the graphics instruction data to the virtual rendering server, and the virtual rendering server receives the storage address information that is of the graphics instruction data and is sent by the virtual client process.

Further, optionally, that the rendering server receives the storage address information that is of the graphics instruction data and is sent by the virtual client process may specifically include:
the virtual rendering server receives an instruction notification message sent by the virtual client process, where the instruction notification message carries the storage address information of the graphics instruction data; or
the virtual rendering server sends an address obtaining request to the virtual client process, and receives an address response message that is returned by the virtual client process according to the address obtaining request, where the address response message carries the storage address information of the graphics instruction data.

In an optional implementation manner, in step S102, the virtual rendering server obtains the graphics instruction data from the shared memory according to the storage address information of the graphics instruction data. Specifically, the virtual rendering server accesses the shared memory according to the mapping address of the shared memory and obtains the graphics instruction data from the shared memory according to the storage address information of the graphics instruction data.

In an optional implementation manner, in step S103, the virtual rendering server performs rendering processing on the obtained graphics instruction data to obtain the target display data, and sends the target display data to the virtual client process. Specifically, the virtual rendering server performs rendering processing on the obtained graphics instruction data to obtain rendering data, where the rendering data is stored in a video card. The virtual rendering server performs screen capture processing on the rendering data and performs compression processing to obtain the target display data. The virtual rendering server sends the target display data to the virtual client process, so that the virtual client process decompresses the target display data to obtain graphics display data, and sends the graphics display data to the thin terminal, so that the thin terminal displays the graphics display data.

In an optional implementation manner, that the virtual rendering server sends the target display data to the virtual client process may specifically include:
the virtual rendering server stores the target display data into the shared memory, and generates storage address information of the target display data; and
the virtual rendering server sends the storage address information of the target display data to the virtual client process, so that the virtual client process obtains the target display data from the shared memory according to the storage address information of the target display data.

Further, optionally, that the virtual rendering server sends the storage address information of the target display data to the virtual client process may include:
the virtual rendering server sends a data notification message to the virtual client process, where the data notification message carries the storage address information of the target display data; or
when receiving a data obtaining request sent by the virtual client process, the virtual rendering server returns an address response message according to an address obtaining request, where the address response message carries the storage address information of the target display data.

In an optional implementation manner, that the virtual rendering server sends the target display data to the virtual client process may further be specifically: the virtual rendering server directly sends the target display data to the virtual client process through a network transmission channel.

In the graphics data processing method provided by this embodiment of the present invention, a virtual rendering server creates a shared memory through negotiation with a virtual client process. The virtual rendering server may receive storage address information that is of graphics instruction data and is sent by the virtual client process, so that the virtual rendering server may obtain the graphics instruction data from the shared memory according to the storage address information of the graphics instruction data, and the virtual rendering server may perform rendering processing on the obtained graphics instruction data to obtain target display data and send the target display data to the virtual client process. The virtual rendering server may further send storage address information of the target display data to the virtual client process, so that the virtual client process may obtain the target display data from the shared memory according to the storage address information of the target display data, or the virtual rendering server may send the target display data to the virtual client process through a network transmission channel. By using this embodiment of the present invention, only the storage address information of the graphics instruction data or the storage address information of the target display data needs to be transmitted between the virtual client process and the virtual rendering server. In this way, the graphics instruction data or the target display data may be obtained from the shared memory; the graphics instruction data does not need to be directly transmitted through the network transmission channel between the virtual client process and the virtual rendering server, or the target display data does not need to be directly transmitted through the network transmission channel between the virtual client process and the virtual rendering server. This shortens a transmission delay, decreases bandwidth of the transmission channel, and improves graphics processing performance.

FIG. 2 is a flowchart of a graphics data processing method according to a second embodiment of the present invention. In the graphics data processing method shown in FIG. 2, a virtual rendering server is used as an execution body for description. As shown in the figure, a procedure in this embodiment includes steps S201-S203.
S201: The virtual rendering server obtains graphics instruction data sent by a virtual client process, and performs rendering processing on the graphics instruction data to obtain target display data.
S202: The virtual rendering server stores the target display data into a shared memory, and generates storage address information of the target display data, where the shared memory is a memory that is created by the virtual client process and the virtual rendering server through negotiation.
S203: The virtual rendering server sends the storage address information of the target display data to the virtual client process, so that the virtual client process obtains the target display data from the shared memory according to the storage address information of the target dispaly data.

Further, optionally, before step S201, this embodiment of the present invention may further include the following step:

The virtual rendering server creates the shared memory on a physical machine through negotiation with the virtual client process, and generates a mapping address of the shared memory, where the virtual rendering server and the virtual client process are virtual machines that run on the same physical machine.

In an optional implementation manner, the virtual rendering server creates the shared memory on a physical machine through negotiation with the virtual client process. Specifically, a memory is applied for in the physical machine and is used as the shared memory. The virtual rendering server obtains a system address of the shared memory. Then the virtual rendering server maps the obtained system address of the shared memory to process address space of the virtual rendering server, to obtain the mapping address of the shared memory, and further generates the mapping address of the shared memory. The system address of the shared memory is an absolute physical address of an operating system, that is, the virtual rendering server cannot directly access the system address of the shared memory. The virtual rendering server may map the system address of the shared memory to the process address space of the virtual rendering server, for example, a register of the virtual rendering server. The virtual rendering server may directly access the mapping address of the shared memory, so that the virtual rendering server may access the shared memory according to the mapping address of the shared memory, thereby reading data from or writing data into the shared memory.

In an optional implementation manner, in step S201, the virtual rendering server obtains the graphics instruction data sent by the virtual client process, and performs rendering processing on the graphics instruction data to obtain the target display data. Specifically, the virtual rendering server performs rendering processing on the obtained graphics instruction data to obtain rendering data, where the rendering data is stored in a video card. The virtual rendering server performs screen capture processing on the rendering data and performs compression processing to obtain the target display data.

In an optional implementation manner, that the virtual rendering server obtains graphics instruction data sent by a virtual client process may specifically include: the virtual rendering server receives storage address information that is of the graphics instruction data and is sent by the virtual client process; and the virtual rendering server obtains the graphics instruction data from the shared memory according to the storage address information of the graphics instruction data. The virtual rendering server accesses the shared memory according to the mapping address of the shared memory and obtains the graphics instruction data from the shared memory according to the storage address information of the graphics instruction data.

Further, optionally, that the virtual rendering server receives storage address information that is of the graphics instruction data and is sent by the virtual client process may specifically include:
the virtual rendering server receives an instruction notification message sent by the virtual client process, where the instruction notification message carries the storage address information of the graphics instruction data; or
the virtual rendering server sends an address obtaining request to the virtual client process, and receives an address response message that is returned by the virtual client process according to the address obtaining request, where the address response message carries the storage address information of the graphics instruction data.

In an optional implementation manner, that the virtual rendering server obtains graphics instruction data sent by a virtual client process may further be specifically: the virtual client process directly sends the graphics instruction data to the virtual rendering server through a network transmission channel.

In an optional implementation manner, in step S202, the virtual rendering server stores the target display data into the shared memory, and generates the storage address information of the target display data. Specifically, the virtual rendering server stores the target display data obtained in step S201 into the shared memory, and generates the storage address information of the target display data.

In an optional implementation manner, in step S203, the virtual rendering server sends the storage address information of the target display data to the virtual client process, so that the virtual client process obtains the target display data from the shared memory according to the storage address information of the target display data. In this way, the virtual client process decompresses the target display data to obtain graphics display data and sends the graphics display data to a thin terminal, so that the thin terminal displays the graphics display data.

Further, optionally, that the virtual rendering server sends the storage address information of the target display data to the virtual client process may include:
the virtual rendering server sends a data notification message to the virtual client process, where the data notification message carries the storage address information of the target display data; or
when receiving a data obtaining request sent by the virtual client process, the virtual rendering server returns an address response message according to an address obtaining request, where the address response message carries the storage address information of the target display data.

In the graphics data processing method provided by this embodiment of the present invention, a virtual rendering server creates a shared memory through negotiation with a virtual client process. The virtual rendering server obtains graphics instruction data sent by the virtual client process, performs rendering processing on the graphics instruction data to obtain target display data, stores the target display data into the shared memory, and generates storage address information of the target displays data. The virtual rendering server sends the storage address information of the target display data to the virtual client process, so that the virtual client process obtains the target display data from the shared memory according to the storage address information of the target display data. The virtual rendering server may receive storage address information that is of the graphics instruction data and is sent by the virtual client process, so that the virtual rendering server obtains graphics instruction data from the shared memory according to the storage address information of the graphics instruction data, or the virtual rendering server receives the graphics instruction data that is directly transmitted by the virtual client process through a network transmission channel. By using this embodiment of the present invention, only the storage address information of the target display data or the storage address information of the graphics instruction data needs to be transmitted between the virtual client process and the virtual rendering server. In this way, the target display data or the graphics instruction data may be obtained from the shared memory; the graphics instruction data does not need to be directly transmitted through the network transmission channel between the virtual client process and the virtual rendering server, or display image data does not need to be directly transmitted through the network transmission channel between the virtual client process and the virtual rendering server. This shortens a transmission delay, decreases bandwidth of the transmission channel, and improves graphics processing performance.

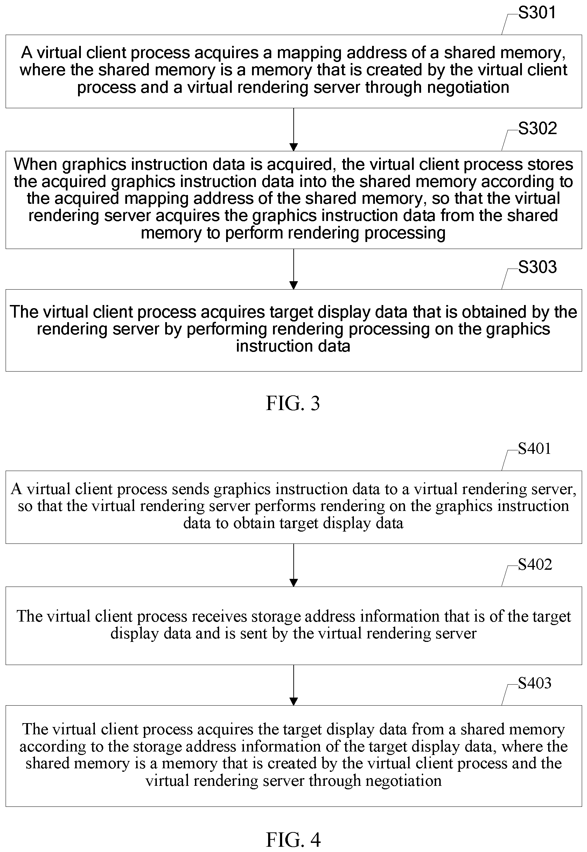

FIG. 3 is a flowchart of a graphics data processing method according to a third embodiment of the present invention. In the graphics data processing method shown in FIG. 3, a virtual client process is used as an execution body for description. As shown in the figure, a procedure in this embodiment includes steps S301-S303.
S301: The virtual client process obtains a mapping address of a shared memory, where the shared memory is a memory that is created by the virtual client process and a virtual rendering server through negotiation.
S302: When graphics instruction data is obtained, the virtual client process stores the obtained graphics instruction data into the shared memory according to the obtained mapping address of the shared memory, so that the virtual rendering server obtains the graphics instruction data from the shared memory to perform rendering processing.
S303: The virtual client process obtains target display data that is obtained by the rendering server by performing rendering processing on the graphics instruction data.

In an optional implementation manner, in step S301, the virtual client process obtains the mapping address of the shared memory, where the shared memory is a memory that is created by the virtual client process through negotiation with the virtual rendering server, and the virtual client process and the virtual rendering server are virtual machines that run on a same physical machine. Specifically, that the virtual client process obtains a mapping address of a shared memory may include: the virtual client process creates the shared memory on the physical machine through negotiation with the virtual rendering server, and generates the mapping address of the shared memory. Further, optionally, a memory is applied for in the physical machine and is used as the shared memory. The virtual rendering server obtains a system address of the shared memory. Then the virtual rendering server maps the obtained system address of the shared memory to process address space of the virtual rendering server, to obtain the mapping address of the shared memory, and further generates the mapping address of the shared memory. The system address of the shared memory is an absolute physical address of an operating system, that is, the virtual rendering server cannot directly access the system address of the shared memory. The virtual rendering server may map the system address of the shared memory to the process address space of the virtual rendering server, for example, a register of the virtual rendering server. The virtual rendering server may directly access the mapping address of the shared memory, so that the virtual rendering server may access the shared memory according to the mapping address of the shared memory, thereby reading data from or writing data into the shared memory.

In an optional implementation manner, in step S302, when an instruction that is input from a thin terminal is received, the instruction that is input at the user end triggers an application program in the virtual client process to generate the graphics instruction data. Then the virtual client process obtains the graphics instruction data, for example, the virtual client process may intercept a 3D instruction by using an Opengl ICD driver. The virtual client process stores the received graphics instruction data into the shared memory according to the mapping address of the shared memory, so that the virtual rendering server obtains the graphics instruction data from the shared memory to perform rendering processing.

Further, optionally, after the virtual client process stores the obtained graphics instruction data into the shared memory according to the obtained mapping address of the shared memory, the method may include:
the virtual client process generates storage address information of the graphics instruction data; and
the virtual client process sends the storage address information of the graphics instruction data to the virtual rendering server, so that the virtual rendering server obtains, according to the storage address information of the graphics instruction data, the graphics instruction data from the shared memory to perform rendering processing.

Further, optionally, that the virtual client process sends the storage address information of the graphics instruction data to the virtual rendering server may specifically include:
the virtual client process sends an instruction notification message to the virtual rendering server, where the instruction notification message carries the storage address information of the graphics instruction data; or
when receiving an address obtaining request sent by the virtual rendering server, the virtual client process sends an address response message to the virtual rendering server according to the address obtaining request, where the address response message carries the storage address information of the graphics instruction data.

In an optional implementation manner, in step S303, the virtual client process obtains the target display data that is obtained by the rendering server by performing rendering processing on the graphics instruction data. The virtual client process decompresses the target display data to obtain graphics display data and sends the graphics display data to the thin terminal, so that the thin terminal displays the graphics display data.

In an optional implementation manner, that the virtual client process obtains the target display data that is obtained by the rendering server by performing rendering processing on the graphics instruction data may include:
the virtual client process receives storage address information that is of the target display data and is sent by the virtual rendering server, where the storage address information of the target display data is storage address information of target display data that is generated by storing, by the virtual rendering server, the target display data into the shared memory; and
the virtual client process obtains the target display data from the shared memory according to the storage address information of the target display data.

Further, optionally, that the virtual client process receives storage address information that is of the target display data and is sent by the virtual rendering server may include:
the virtual client process receives a data notification message sent by the virtual rendering server, where the data notification message carries the storage address information of the target display data; or
when sending a data obtaining request to the virtual rendering server, the virtual client process receives an address response message that is returned by the virtual rendering server according to an address obtaining request, where the address response message carries the storage address information of the target display data.

In an optional implementation manner, that the virtual client process obtains the target display data that is obtained by the rendering server by performing rendering processing on the graphics instruction data may be: the virtual client process receives the target display data that is directly sent by the virtual rendering server through a network transmission channel.

In the graphics data processing method provided by this embodiment of the present invention, a virtual client process creates a shared memory through negotiation with a virtual rendering server. The virtual client process obtains a mapping address of the shared memory. When graphics instruction data is obtained, the virtual client process stores the obtained graphics instruction data into the shared memory according to the obtained mapping address of the shared memory, so that the virtual rendering server may obtain the graphics instruction data from the shared memory and perform rendering processing to obtain target display data, and the virtual client process receives the target display data sent by the virtual rendering server. The virtual rendering server may send storage address information of the target display data to the virtual client process, so that the virtual client process may obtain the target display data from the shared memory according to the storage address information of the target display data, or the virtual rendering server may send the target display data to the virtual client process through a network transmission channel. By using this embodiment of the present invention, only storage address information of the graphics instruction data or the storage address information of the target display data needs to be transmitted between the virtual client process and the virtual rendering server. In this way, the graphics instruction data or the target display data may be obtained from the shared memory; the graphics instruction data does not need to be directly transmitted through the network transmission channel between the virtual client process and the virtual rendering server, or the target display data does not need to be directly transmitted through the network transmission channel between the virtual client process and the virtual rendering server. This shortens a transmission delay, decreases bandwidth of the transmission channel, and improves graphics processing performance.

FIG. 4 is a flowchart of a graphics data processing method according to a fourth embodiment of the present invention. In the graphics data processing method shown in FIG. 4, a virtual client process is used as an execution body for description. As shown in the figure, a procedure in this embodiment includes steps S401-S403.
S401: The virtual client process sends graphics instruction data to a virtual rendering server, so that the virtual rendering server performs rendering on the graphics instruction data to obtain target display data.
S402: The virtual client process receives storage address information that is of the target display data and is sent by the virtual rendering server.
S403: The virtual client process obtains the target display data from a shared memory according to the storage address information of the target display data, where the shared memory is a memory that is created by the virtual client process and the virtual rendering server through negotiation.

Further, optionally, before step S401, this embodiment of the present invention may further include the following step:

The virtual client process creates the shared memory on a physical machine through negotiation with the virtual rendering server, and generates a mapping address of the shared memory, where the virtual rendering server and the virtual client process are virtual machines that run on the same physical machine.

In an optional implementation manner, the virtual client process creates the shared memory on a physical machine through negotiation with the virtual rendering server. Specifically, a memory is applied for in the physical machine and is used as the shared memory. The virtual rendering server obtains a system address of the shared memory. Then the virtual rendering server maps the obtained system address of the shared memory to process address space of the virtual rendering server, to obtain the mapping address of the shared memory, and further generates the mapping address of the shared memory. The system address of the shared memory is an absolute physical address of an operating system, that is, the virtual rendering server cannot directly access the system address of the shared memory. The virtual rendering server may map the system address of the shared memory to the process address space of the virtual rendering server, for example, a register of the virtual rendering server. The virtual rendering server may directly access the mapping address of the shared memory, so that the virtual rendering server may access the shared memory according to the mapping address of the shared memory, thereby reading data from or writing data into the shared memory.

In an optional implementation manner, in step S401, that the virtual client process sends graphics instruction data to a virtual rendering server may include:
the virtual client process obtains the mapping address of the shared memory; and
when the graphics instruction data is obtained, the virtual client process stores the obtained graphics instruction data into the shared memory according to the obtained mapping address of the shared memory, so that the virtual rendering server obtains the graphics instruction data from the shared memory to perform rendering processing.

Further, optionally, after the virtual client process stores the obtained graphics instruction data into the shared memory according to the obtained mapping address of the shared memory, the method may include:
the virtual client process generates storage address information of the graphics instruction data; and
the virtual client process sends the storage address information of the graphics instruction data to the virtual rendering server, so that the virtual rendering server obtains, according to the storage address information of the graphics instruction data, the graphics instruction data from the shared memory to perform rendering processing.

Further, optionally, that the virtual client process sends the storage address information of the graphics instruction data to the virtual rendering server may include:
the virtual client process sends an instruction notification message to the virtual rendering server, where the instruction notification message carries the storage address information of the graphics instruction data; or
when receiving an address obtaining request sent by the virtual rendering server, the virtual client process sends an address response message to the virtual rendering server according to the address obtaining request, where the address response message carries the storage address information of the graphics instruction data.

In an optional implementation manner, that the virtual client process sends graphics instruction data to a virtual rendering server may be specifically: the virtual client process directly sends the graphics instruction data to the virtual rendering server through a network transmission channel.

In an optional implementation manner, in step S402, the virtual client process receives the storage address information that is of the target display data and is sent by the virtual rendering server. Further, optionally, that the virtual client process receives the storage address information that is of the target display data and is sent by the virtual rendering server may specifically include:
the virtual client process receives a data notification message sent by the virtual rendering server, where the data notification message carries the storage address information of the target display data; or
when sending a data obtaining request to the virtual rendering server, the virtual client process receives an address response message that is returned by the virtual rendering server according to an address obtaining request, where the address response message carries the storage address information of the target display data.

In an optional implementation manner, in step S403, the virtual client process obtains the target display data from the shared memory according to the storage address information of the target display data, where the target display data is obtained by the virtual rendering server by performing rendering processing on the graphics instruction data. The virtual client process decompresses the target display data to obtain graphics display data and sends the graphics display data to a thin terminal, so that the thin terminal displays the graphics display data.

In the graphics data processing method provided by this embodiment of the present invention, a virtual client process creates a shared memory through negotiation with a virtual rendering server. The virtual client process sends graphics instruction data to the virtual rendering server, so that the virtual rendering server performs rendering on the graphics instruction data to obtain target display data, and the virtual client process receives storage address information that is of the target display data and is sent by the virtual rendering server, and obtains the target display data from the shared memory according to the storage address information of the target display data. The virtual client process may send storage address information of the graphics instruction data to the virtual rendering server, so that the virtual rendering server may obtain graphics data from the shared memory according to the storage address information of the graphics instruction data, or the virtual client process directly transmits the graphics instruction data to the virtual rendering server through a network transmission channel. By using this embodiment of the present invention, only the storage address information of the target display data or the storage address information of the graphics instruction data needs to be transmitted between the virtual client process and the virtual rendering server. In this way, the target display data or the graphics instruction data may be obtained from the shared memory; the graphics instruction data does not need to be directly transmitted through the network transmission channel between the virtual client process and the virtual rendering server, or display image data does not need to be directly transmitted through the network transmission channel between the virtual client process and the virtual rendering server. This shortens a transmission delay, decreases bandwidth of the transmission channel, and improves graphics processing performance.

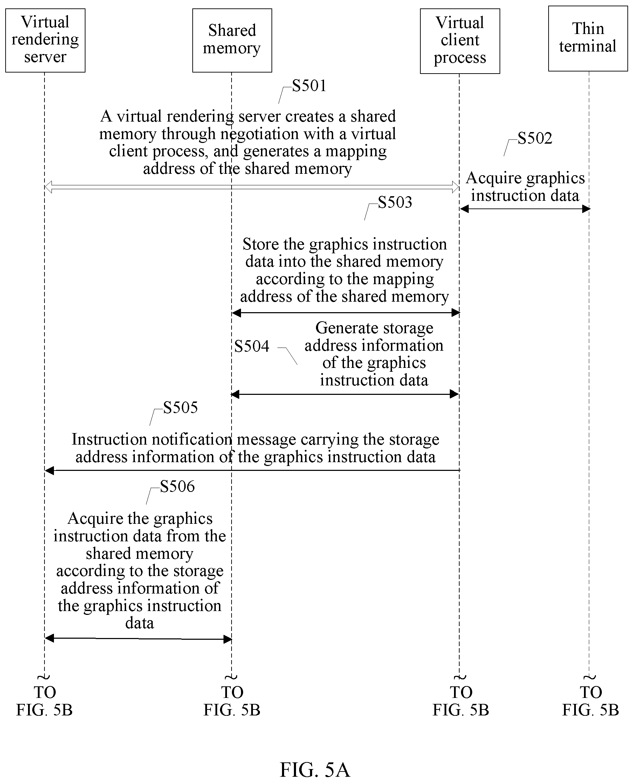

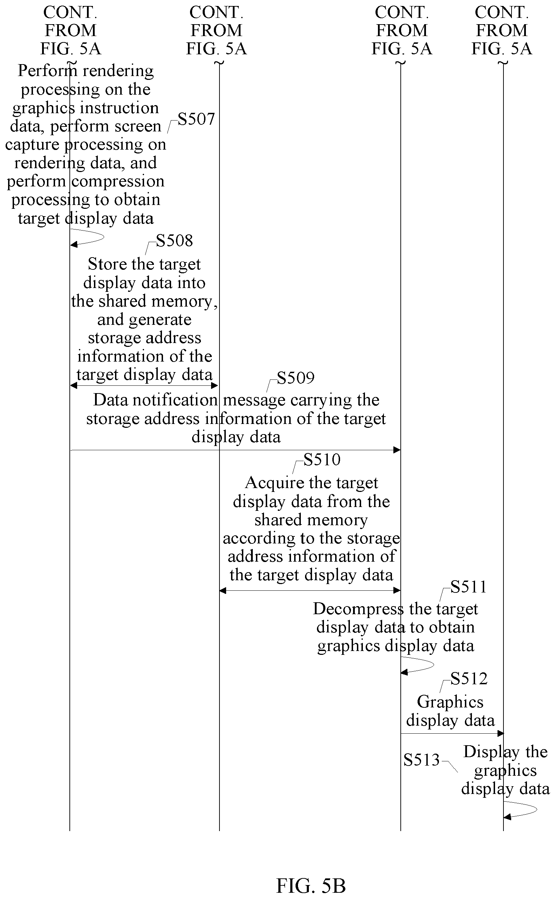

FIG. 5A and FIG. 5B is a flowchart of a graphics data processing method according to a fifth embodiment of the present invention. As shown in the figure, a procedure in this embodiment includes steps S501-S513.
S501: A virtual rendering server creates a shared memory through negotiation with a virtual client process, and generates a mapping address of the shared memory.
   In an optional implementation manner, the virtual rendering server may create the shared memory on a physical machine through negotiation with the virtual client process. Specifically, a memory is applied for in the physical machine and is used as the shared memory. The virtual rendering server obtains a system address of the shared memory. Then the virtual rendering server maps the obtained system address of the shared memory to process address space of the virtual rendering server, to obtain the mapping address of the shared memory, and further generates the mapping address of the shared memory. The system address of the shared memory is an absolute physical address of an operating system, that is, the virtual rendering server cannot directly access the system address of the shared memory. The virtual rendering server may map the system address of the shared memory to the process address space of the virtual rendering server, for example, a register of the virtual rendering server. The virtual rendering server may directly access the mapping address of the shared memory, so that the virtual rendering server may access the shared memory according to the mapping address of the shared memory, thereby reading data from or writing data into the shared memory.
S502: The virtual client process obtains graphics instruction data.
   In an optional implementation manner, when the virtual client process receives an instruction that is input from a thin terminal, the instruction that is input at the user end triggers an application program in the virtual client process to generate the graphics instruction data. Then the virtual client process obtains the graphics instruction data, for example, the virtual client process may intercept a 3D instruction by using an Opengl ICD driver.
S503: The virtual client process stores the graphics instruction data into the shared memory according to the mapping address of the shared memory.
S504: The virtual client process generates storage address information of the graphics instruction data.
S505: The virtual client process sends an instruction notification message to the virtual rendering server, where the instruction notification message carries the storage address information of the graphics instruction data.
S506: The virtual rendering server obtains the graphics instruction data from the shared memory according to the storage address information of the graphics instruction data.
S507: The virtual rendering server performs rendering processing on the obtained graphics instruction data, performs screen capture processing on obtained rendering data, and performs compression processing to obtain target display data.
S508: The virtual rendering server stores the target display data into the shared memory, and generates storage address information of the target display data.
S509: The virtual rendering server sends a data notification message to the virtual client process, where the data notification message carries the storage address information of the target display data.
S510: The virtual client process obtains the target display data from the shared memory according to the storage address information of the target display data.
S511: The virtual client process decompresses the target display data to obtain graphics display data.
S512: The virtual client process sends the graphics display data to a thin terminal.
S513: The thin terminal displays the graphics display data.

In the graphics data processing method provided by this embodiment of the present invention, a virtual client process may create a shared memory through negotiation with a virtual rendering server. The virtual client process may send storage address information of graphics instruction data to the virtual rendering server, so that the virtual rendering server may obtain the graphics instruction data from the shared memory according to the storage address information of the graphics instruction data. The virtual rendering server may further send storage address information of target display data to the virtual client process, so that the virtual client process may obtain the target display data from the shared memory according to the storage address information of the target display data. By using this embodiment of the present invention, only the storage address information of the target display data and the storage address information of the graphics instruction data need to be transmitted between the virtual client process and the virtual rendering server. In this way, the target display data and the graphics instruction data may be obtained from the shared memory; the graphics instruction data and display image data do not need to be directly transmitted through a network transmission channel between the virtual client process and the virtual rendering server. This shortens a transmission delay, decreases bandwidth of the transmission channel, and improves graphics processing performance.

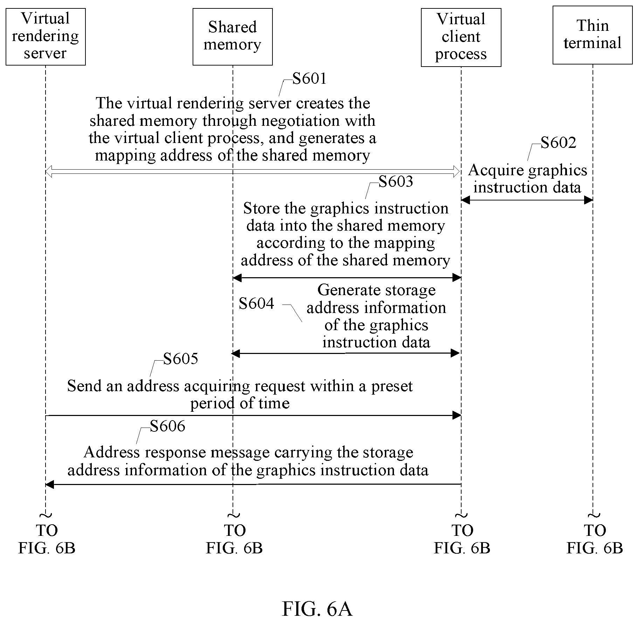

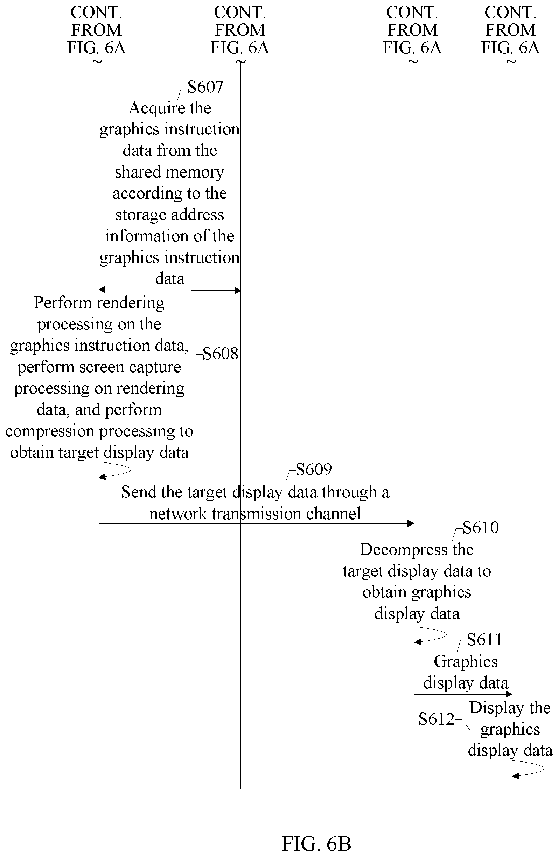

FIG. 6A and FIG. 6B is a flowchart of a graphics data processing method according to a sixth embodiment of the present invention. As shown in the figure, a procedure in this embodiment includes steps S601-S612.
S601: A virtual rendering server creates a shared memory through negotiation with a virtual client process, and generates a mapping address of the shared memory.
S602: The virtual client process obtains graphics instruction data.
   In an optional implementation manner, when the virtual client process receives an instruction that is input from a thin terminal, the instruction that is input at the user end triggers an application program in the virtual client process to generate the graphics instruction data. Then the virtual client process obtains the graphics instruction data, for example, the virtual client process may intercept a 3D instruction by using an Opengl ICD driver.
S603: The virtual client process stores the graphics instruction data into the shared memory according to the mapping address of the shared memory.
S604: The virtual client process generates storage address information of the graphics instruction data.
S605: The virtual rendering server sends an address obtaining request to the virtual client process within a preset period of time.
   In an optional implementation manner, the virtual rendering server sends an address obtaining request to the virtual client process within a preset period of time, where the preset period of time may be an editable time value that is set in advance, for example, 30s or 60s.
S606: The virtual client process sends an address response message to the virtual rendering server according to the address obtaining request, where the address response message carries the storage address information of the graphics instruction data.
S607: The virtual rendering server obtains the graphics instruction data from the shared memory according to the storage address information of the graphics instruction data.
S608: The virtual rendering server performs rendering processing on the obtained graphics instruction data, performs screen capture processing on rendering data, and performs compression processing to obtain target display data.
S609: The virtual rendering server sends the target display data to the virtual client process through a network transmission channel.
S610: The virtual client process decompresses the target display data to obtain graphics display data.
S611: The virtual client process sends the graphics display data to a thin terminal.
S612: The thin terminal displays the graphics display data.

In the graphics data processing method provided by this embodiment of the present invention, a virtual client process may create a shared memory through negotiation with a virtual rendering server. The virtual rendering server may request the virtual client process to send storage address information of graphics instruction data, so that the virtual rendering server may obtain the graphics instruction data from the shared memory according to the storage address information of the graphics instruction data and perform rendering processing on the graphics instruction data to obtain target display data, and the virtual rendering server sends the target display data to the virtual client process through a network transmission channel. By using this embodiment of the present invention, only the storage address information of the graphics instruction data needs to be transmitted between the virtual client process and the virtual rendering server. In this way, the graphics instruction data may be obtained from the shared memory, and the graphics instruction data does not need to be directly transmitted through the network transmission channel between the virtual client process and the virtual rendering server. This shortens a transmission delay, decreases bandwidth of the transmission channel, and improves graphics processing performance.

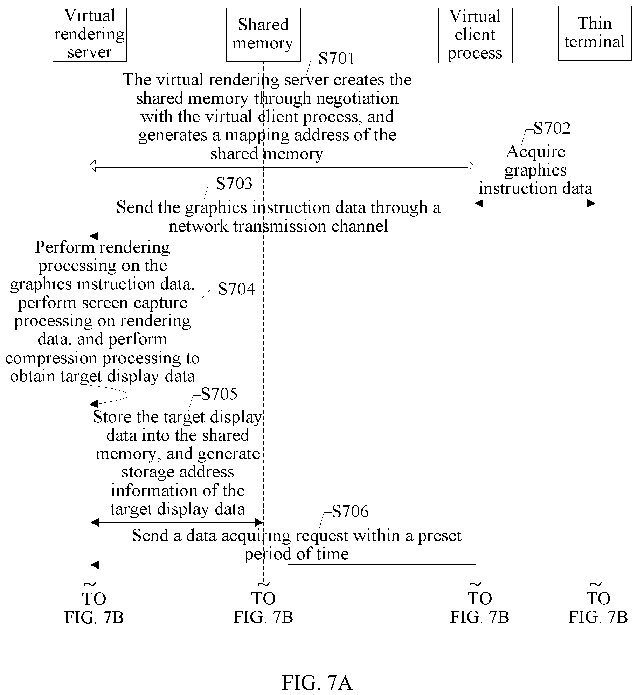

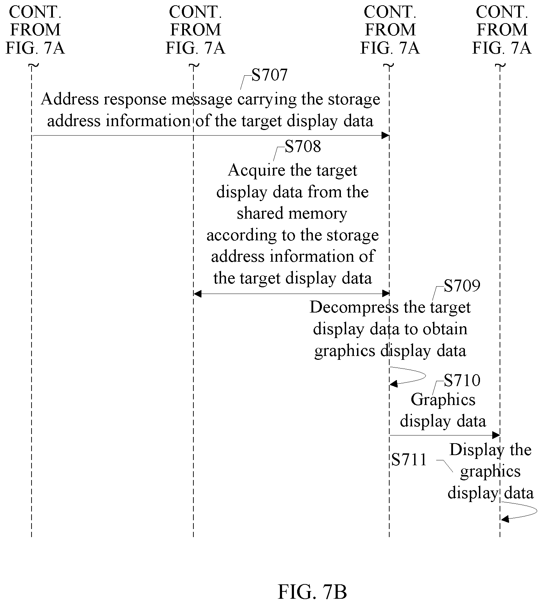

FIG. 7A and FIG. 7B is a flowchart of a graphics data processing method according to a seventh embodiment of the present invention. As shown in the figure, a procedure in this embodiment includes steps S701-S711.
S701: A virtual rendering server creates a shared memory through negotiation with a virtual client process, and generates a mapping address of the shared memory.
S702: The virtual client process obtains graphics instruction data.
   In an optional implementation manner, when the virtual client process receives an instruction that is input from a thin terminal, the instruction that is input at the user end triggers an application program in the virtual client process to generate the graphics instruction data. Then the virtual client process obtains the graphics instruction data, for example, the virtual client process may intercept a 3D instruction by using an Opengl ICD driver.
S703: The virtual client process sends the graphics instruction data to the virtual rendering server through a network transmission channel.
S704: The virtual rendering server performs rendering processing on the graphics instruction data, performs screen capture processing on rendering data, and performs compression processing to obtain target display data.
S705: The virtual rendering server stores the target display data into the shared memory, and generates storage address information of the target display data.
S706: The virtual client process sends a data obtaining request to the virtual rendering server within a preset period of time.
   In an optional implementation manner, the virtual client process sends a data obtaining request to the virtual rendering server within a preset period of time, where the preset period of time may be an editable time value that is set in advance, for example, 30s or 60s.
S707: The virtual rendering server sends an address response message to the virtual client process according to an address obtaining request, where the address response message carries the storage address information of the target display data.
S708: The virtual client process obtains the target display data from the shared memory according to the storage address information of the target display data.
S709: The virtual client process decompresses the target display data to obtain graphics display data.
S710: The virtual client process sends the graphics display data to a thin terminal.
S711: The thin terminal displays the graphics display data.

In the graphics data processing method provided by this embodiment of the present invention, a virtual client process may create a shared memory through negotiation with a virtual rendering server. The virtual client process sends graphics instruction data to the virtual rendering server through a network transmission channel, so that the virtual rendering server performs rendering on the graphics instruction data to obtain target display data, and the virtual client process requests the virtual rendering server to send storage address information of the target display data and obtains the target display data from the shared memory according to the storage address information of the target display data. By using this embodiment of the present invention, only the storage address information of the target display data needs to be transmitted between the virtual client process and the virtual rendering server. In this way, the target display data may be obtained from the shared memory, and the target display data does not need to be directly transmitted through the network transmission channel between the virtual client process and the virtual rendering server. This shortens a transmission delay, decreases bandwidth of the transmission channel, and improves graphics processing performance.

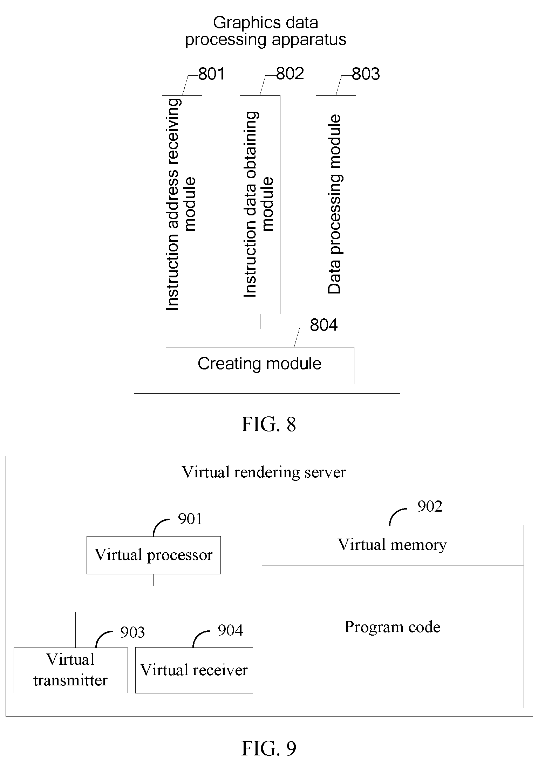

The following describes in detail a graphics data processing apparatus provided by an embodiment of the present invention with reference to FIG. 8, FIG. 10, FIG. 12, and FIG. 14 separately.

It should be noted that, a graphics data processing apparatus shown in FIG. 8 is used to execute the method in the embodiment of the present invention shown in FIG. 1, and is an execution body based on the graphics data processing method of FIG. 1. For ease of description, only parts related to the embodiments of the present invention are illustrated. For technical details that are not disclosed, refer to the embodiment of the present invention shown in FIG. 1.

FIG. 8 is a schematic structural diagram of a graphics data processing apparatus according to a first embodiment of the present invention. The graphics data processing apparatus provided by this embodiment of the present invention may include a virtual rendering server, where the virtual rendering server may specifically include an instruction address receiving module 801, an instruction data obtaining module 802, and a data processing module 803.

The instruction address receiving module 801 is configured to receive storage address information that is of graphics instruction data and is sent by a virtual client process.

In an optional implementation manner, the instruction address receiving module 801 receives the storage address information that is of the graphics instruction data and is sent by the virtual client process. Specifically, when the virtual client process receives an instruction that is input from a thin terminal, the instruction that is input at the user end triggers an application program in the virtual client process to generate the graphics instruction data. Then the virtual client process obtains the graphics instruction data, stores the graphics instruction data into a shared memory, and generates the storage address information of the graphics instruction data. The virtual client process sends the storage address information of the graphics instruction data to the virtual rendering server, and the instruction address receiving module 801 receives the storage address information that is of the graphics instruction data and is sent by the virtual client process.

Further, optionally, that the instruction address receiving module 801 receives the storage address information that is of the graphics instruction data and is sent by the virtual client process may specifically include:
receiving an instruction notification message sent by the virtual client process, where the instruction notification message carries the storage address information of the graphics instruction data; or
sending an address obtaining request to the virtual client process, and receiving an address response message that is returned by the virtual client process according to the address obtaining request, where the address response message carries the storage address information of the graphics instruction data.

The instruction data obtaining module 802 is configured to obtain the graphics instruction data from the shared memory according to the storage address information that is of the graphics instruction data and is received by the instruction address receiving module 801, where the shared memory is a memory that is created by the virtual client process and the virtual rendering server through negotiation.

In an optional implementation manner, the instruction data obtaining module 802 obtains the graphics instruction data from the shared memory according to the storage address information of the graphics instruction data. Specifically, the instruction data obtaining module 802 accesses the shared memory according to a mapping address of the shared memory, and obtains the graphics instruction data from the shared memory according to the storage address information of the graphics instruction data.

The data processing module 803 is configured to perform rendering processing on the graphics instruction data obtained by the instruction data obtaining module 802 to obtain target display data, and send the target display data to the virtual client process.

In an optional implementation manner, the data processing module 803 performs rendering processing on the obtained graphics instruction data to obtain the target display data, and sends the target display data to the virtual client process. Specifically, the data processing module 803 performs rendering processing on the obtained graphics instruction data to obtain rendering data, where the rendering data is stored in a video card. The virtual rendering server performs screen capture processing on the rendering data and performs compression processing to obtain the target display data. The virtual rendering server sends the target display data to the virtual client process, so that the virtual client process decompresses the target display data to obtain graphics display data, and sends the graphics display data to a thin terminal, so that the thin terminal displays the graphics display data.

In an optional implementation manner, the data processing module 803 may include a target data storing unit and a target data address sending unit.

The target data storing unit is configured to store the target display data into the shared memory, and generate storage address information of the target display data.

The target data address sending unit is configured to send the storage address information of the target display data to the virtual client process, so that the virtual client process obtains the target display data from the shared memory according to the storage address information of the target display data.

Further, optionally, that the target data address sending unit sends the storage address information of the target display data to the virtual client process may include:
sending a data notification message to the virtual client process, where the data notification message carries the storage address information of the target display data; or
when a data obtaining request sent by the virtual client process is received, returning an address response message according to an address obtaining request, where the address response message carries the storage address information of the target display data.

In an optional implementation manner, that the virtual rendering server sends the target display data to the virtual client may further be specifically: the virtual rendering server directly sends the target display data to the virtual client through a network transmission channel.

Further, optionally, the virtual rendering server provided by this embodiment of the present invention may further include a creating module 804.

The creating module 804 is configured to create the shared memory on a physical machine through negotiation with the virtual client process, and generate the mapping address of the shared memory.

In an optional implementation manner, the creating module 804 creates the shared memory on a physical machine through negotiation with the virtual client process. Specifically, a memory is applied for in the physical machine and is used as the shared memory. The virtual rendering server obtains a system address of the shared memory. Then the virtual rendering server maps the obtained system address of the shared memory to process address space of the virtual rendering server, to obtain the mapping address of the shared memory, and further generates the mapping address of the shared memory.

Further, optionally, the creating module 804 may include a system address obtaining unit and a mapping unit.

The system address obtaining unit is configured to obtain the system address of the shared memory.

The mapping unit is configured to map the system address that is of the shared memory and is obtained by the system address obtaining unit to the process address space of the virtual rendering server, to obtain the mapping address of the shared memory.

The system address of the shared memory is an absolute physical address of an operating system, that is, the virtual rendering server cannot directly access the system address of the shared memory. The virtual rendering server may map the system address of the shared memory to the process address space of the virtual rendering server, for example, a register of the virtual rendering server. The virtual rendering server may directly access the mapping address of the shared memory, so that the virtual rendering server may access the shared memory according to the mapping address of the shared memory, thereby reading data from or writing data into the shared memory.

The graphics data processing apparatus provided by this embodiment of the present invention includes a virtual rendering server, where the virtual rendering server may specifically include an instruction address receiving module, an instruction data obtaining module, and a data processing module. The virtual rendering server may create a shared memory through negotiation with a virtual client process. The instruction address receiving module may receive storage address information that is of graphics instruction data and is sent by the virtual client process, so that the instruction data obtaining module may obtain the graphics instruction data from the shared memory according to the storage address information of the graphics instruction data, and the data processing module may perform rendering processing on the obtained graphics instruction data to obtain target display data and send the target display data to the virtual client process. The virtual rendering server may further send storage address information of the target display data to the virtual client process, so that the virtual client process may obtain the target display data from the shared memory according to the storage address information of the target display data, or the virtual rendering server may send the target display data to the virtual client process through a network transmission channel. By using this embodiment of the present invention, only the storage address information of the graphics instruction data or the storage address information of the target display data needs to be transmitted between the virtual client process and the virtual rendering server. In this way, the graphics instruction data or the target display data may be obtained from the shared memory; the graphics instruction data does not need to be directly transmitted through the network transmission channel between the virtual client process and the virtual rendering server, or display image data does not need to be directly transmitted through the network transmission channel between the virtual client process and the virtual rendering server. This shortens a transmission delay, decreases bandwidth of the transmission channel, and improves graphics processing performance.

FIG. 9 is a schematic structural diagram of a virtual rendering server according to an embodiment of the present invention. The virtual rendering server provided by this embodiment of the present invention corresponds to the graphics data processing method shown in FIG. 1, and is an execution body based on the graphics data processing method shown in Fig. 1. FIG. 9 shows a specific implementation form, where the virtual rendering server includes a virtual processor 901, a virtual memory 902, a virtual transmitter 903, and a virtual receiver 904. The virtual memory 902 is configured to store program code. The virtual processor 901 is configured to execute the program code stored in the virtual memory 902. In this embodiment of the present invention, the virtual memory 902 stores program code and the virtual processor 901 is configured to execute the program code:
receiving, by using the virtual receiver 904, storage address information that is of graphics instruction data and is sent by a virtual client process;
obtaining the graphics instruction data from a shared memory according to the storage address information of the graphics instruction data, where the shared memory is a memory that is created by the virtual client process and the virtual rendering server through negotiation; and
performing rendering processing on the obtained graphics instruction data to obtain target display data, and sending, by using the virtual transmitter 903, the target display data to the virtual client process.

In an optional implementation manner, the virtual rendering server and the virtual client process are virtual machines that run on a same physical machine.

The virtual processor 901 is further configured to create the shared memory on the physical machine through negotiation with the virtual client process, and generate a mapping address of the shared memory.

The obtaining, by the virtual processor 901, the graphics instruction data from a shared memory according to the storage address information of the graphics instruction data specifically includes: accessing the shared memory according to the mapping address of the shared memory.

In an optional implementation manner, that the virtual processor 901 creates the shared memory on the physical machine through negotiation with the virtual client process, and generates a mapping address of the shared memory specifically includes:
obtaining a system address of the shared memory; and
mapping the obtained system address of the shared memory to process address space of the virtual rendering server, to obtain the mapping address of the shared memory.

In an optional implementation manner, the sending, by the virtual processor 901 by using the virtual transmitter 903, the target display data to the virtual client process specifically includes:
storing the target display data into the shared memory, and generating storage address information of the target display data; and
sending the storage address information of the target display data to the virtual client process, so that the virtual client process obtains the target display data from the shared memory according to the storage address information of the target display data.

The rendering server provided by this embodiment of the present invention includes a virtual processor, a virtual memory, a virtual transmitter, and a virtual receiver. The virtual rendering server may create a shared memory through negotiation with a virtual client process and receive, by using the virtual receiver, storage address information that is of graphics instruction data and is sent by the virtual client process, so that the virtual processor may obtain the graphics instruction data from the shared memory according to the storage address information of the graphics instruction data, perform rendering processing on the obtained graphics instruction data to obtain target display data, and send the target display data to the virtual client process. By using this embodiment of the present invention, only the storage address information of the graphics instruction data or storage address information of the target display data needs to be transmitted between the virtual client process and the virtual rendering server. In this way, the graphics instruction data or the target display data may be obtained from the shared memory; the graphics instruction data does not need to be directly transmitted through a network transmission channel between the virtual client process and the virtual rendering server, or display image data does not need to be directly transmitted through a network transmission channel between the virtual client process and the virtual rendering server. This shortens a transmission delay, decreases bandwidth of the transmission channel, and improves graphics processing performance.

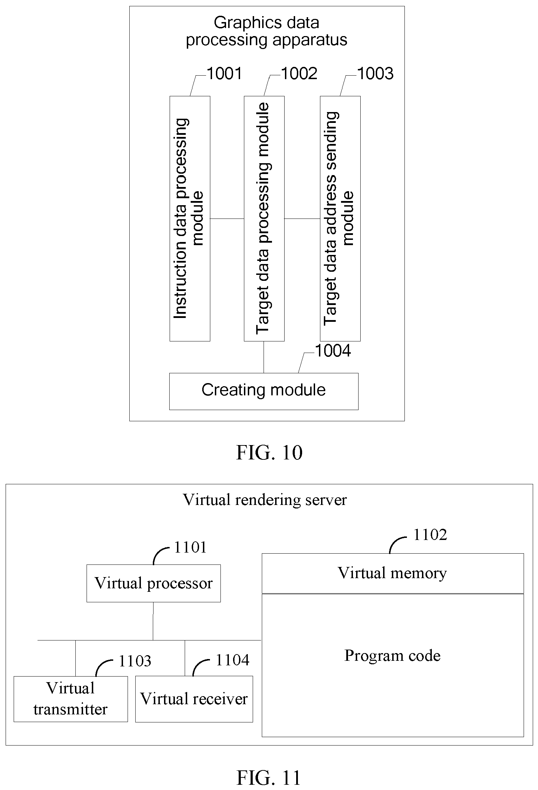

It should be noted that, a graphics data processing apparatus shown in FIG. 10 is used to execute the method in the embodiment of the present invention shown in FIG. 2, and is an execution body based on the graphics data processing method of FIG. 2. For ease of description, only parts related to the embodiments of the present invention are illustrated. For technical details that are not disclosed, refer to the embodiment of the present invention shown in FIG. 2.

FIG. 10 is a schematic structural diagram of a graphics data processing apparatus according to a second embodiment of the present invention. The graphics data processing apparatus provided by this embodiment of the present invention may include a virtual rendering server, where the virtual rendering server may specifically include an instruction data processing module 1001, a target data processing module 1002, and a target data address sending module 1003.

The instruction data processing module 1001 is configured to obtain graphics instruction data sent by a virtual client process, and perform rendering processing on the graphics instruction data to obtain target display data.

In an optional implementation manner, the instruction data processing module 1001 obtains the graphics instruction data sent by the virtual client process, and performs rendering processing on the graphics instruction data to obtain the target display data. Specifically, the virtual rendering server performs rendering processing on the obtained graphics instruction data to obtain rendering data, where the rendering data is stored in a video card. The virtual rendering server performs screen capture processing on the rendering data and performs compression processing to obtain the target display data.

In an optional implementation manner, the instruction data processing module 1001 may include an instruction address receiving unit and an instruction data obtaining unit. The instruction address receiving unit is configured to receive storage address information that is of the graphics instruction data and is sent by the virtual client process. The instruction data obtaining unit is configured to obtain the graphics instruction data from a shared memory according to the storage address information of the graphics instruction data. The virtual rendering server accesses the shared memory according to a mapping address of the shared memory and obtains the graphics instruction data from the shared memory according to the storage address information of the graphics instruction data.

Further, optionally, that the instruction address receiving unit receives storage address information that is of the graphics instruction data and is sent by the virtual client process may specifically include:
receiving an instruction notification message sent by the virtual client process, where the instruction notification message carries the storage address information of the graphics instruction data; or
sending an address obtaining request to the virtual client process, and receiving an address response message that is returned by the virtual client process according to the address obtaining request, where the address response message carries the storage address information of the graphics instruction data.

In an optional implementation manner, that the instruction data processing module 1001 obtains the graphics instruction data sent by the virtual client process may further be specifically: the virtual client process directly sends the graphics instruction data to the virtual rendering server through a network transmission channel.

The target data processing module 1002 is configured to store the target display data that is obtained through processing by the instruction data processing module 1001 into the shared memory, and generate storage address information of the target display data, where the shared memory is a memory that is created by the virtual client process and the virtual rendering server through negotiation.

In an optional implementation manner, the target data processing module 1002 stores the target display data into the shared memory, and generates the storage address information of the target display data. Specifically, the target data processing module 1002 stores the target display data that is obtained through processing by the instruction data processing module 1001 into the shared memory, and generates the storage address information of the target display data.

The target data address sending module 1003 is configured to send, to the virtual client process, the storage address information that is of the target display data and is generated by the target data processing module 1002, so that the virtual client process obtains the target display data from the shared memory according to the storage address information of the target display data.

In an optional implementation manner, the target data address sending module 1003 sends the storage address information of the target display data to the virtual client process, so that the virtual client process obtains the target display data from the shared memory according to the storage address information of the target display data. In this way, the virtual client process decompresses the target display data to obtain graphics display data and sends the graphics display data to a thin terminal, so that the thin terminal displays the graphics display data.

Further, optionally, that the target data address sending module 1003 sends the storage address information of the target display data to the virtual client process may include:
sending a data notification message to the virtual client process, where the data notification message carries the storage address information of the target display data; or
when a data obtaining request sent by the virtual client process is received, returning an address response message according to an address obtaining request, where the address response message carries the storage address information of the target display data.

Further, optionally, the virtual rendering server provided by this embodiment of the present invention may further include a creating module 1004.

The creating module 1004 is configured to create the shared memory on a physical machine through negotiation with the virtual client process, and generate the mapping address of the shared memory. In an optional implementation manner, the creating module 1004 creates the shared memory on a physical machine through negotiation with the virtual client process. Specifically, a memory is applied for in the physical machine and is used as the shared memory. The virtual rendering server obtains a system address of the shared memory. Then the virtual rendering server maps the obtained system address of the shared memory to process address space of the virtual rendering server, to obtain the mapping address of the shared memory, and further generates the mapping address of the shared memory.

Further, optionally, the creating module 1004 may include a system address obtaining unit and a mapping unit, where:
the system address obtaining unit is configured to obtain the system address of the shared memory; and
the mapping unit is configured to map the system address that is of the shared memory and is obtained by the system address obtaining unit to the process address space of the virtual rendering server, to obtain the mapping address of the shared memory.

The system address of the shared memory is an absolute physical address of an operating system, that is, the virtual rendering server cannot directly access the system address of the shared memory. The virtual rendering server may map the system address of the shared memory to the process address space of the virtual rendering server, for example, a register of the virtual rendering server. The virtual rendering server may directly access the mapping address of the shared memory, so that the virtual rendering server may access the shared memory according to the mapping address of the shared memory, thereby reading data from or writing data into the shared memory.

The graphics data processing apparatus provided by this embodiment of the present invention includes a virtual rendering server, where the virtual rendering server may specifically include an instruction data processing module, a target data processing module, and a target data address sending module. The virtual rendering server may create a shared memory through negotiation with a virtual client process. The instruction data processing module obtains graphics instruction data sent by the virtual client process and performs rendering processing on the graphics instruction data to obtain target display data. The target data processing module stores the target display data into the shared memory and generates storage address information of the target display data. The target data address sending module sends the storage address information of the target display data to the virtual client process, so that the virtual client process obtains the target display data from the shared memory according to the storage address information of the target display data. The virtual rendering server may receive storage address information that is of the graphics instruction data and is sent by the virtual client process, so that the virtual rendering server may obtain graphics data from the shared memory according to the storage address information of the graphics instruction data, or the virtual rendering server receives the graphics instruction data that is directly transmitted by the virtual client process through a network transmission channel. By using this embodiment of the present invention, only the storage address information of the target display data or the storage address information of the graphics instruction data needs to be transmitted between the virtual client process and the virtual rendering server. In this way, the target display data or the graphics instruction data may be obtained from the shared memory; the graphics instruction data does not need to be directly transmitted through the network transmission channel between the virtual client process and the virtual rendering server, or display image data does not need to be directly transmitted through the network transmission channel between the virtual client process and the virtual rendering server. This shortens a transmission delay, decreases bandwidth of the transmission channel, and improves graphics processing performance.

FIG. 11 is a schematic structural diagram of another virtual rendering server according to an embodiment of the present invention. The virtual rendering server provided by this embodiment of the present invention corresponds to the graphics data processing method shown in FIG. 2, and is an execution body based on the graphics data processing method shown in FIG. 2. FIG. 11 shows a specific implementation form, where the virtual rendering server includes a virtual processor 1101, a virtual memory 1102, a virtual transmitter 1103, and a virtual receiver 1104. The virtual memory 1102 is configured to store program code. The virtual processor 1101 is configured to execute the program code stored in the virtual memory 1102. In this embodiment of the present invention, the virtual memory 1102 stores program code and the virtual processor 1101 is configured to execute the program code:
obtaining graphics instruction data sent by a virtual client process, and performing rendering processing on the graphics instruction data to obtain target display data;
storing the target display data into a shared memory, and generating storage address information of the target display data, where the shared memory is a memory that is created by the virtual client process and the virtual rendering server through negotiation; and
sending, by using the virtual transmitter 1103, the storage address information of the target display data to the virtual client process, so that the virtual client process obtains the target display data from the shared memory according to the storage address information of the target display data.

In an optional implementation manner, the obtaining, by the virtual processor 1101, graphics instruction data sent by a virtual client process specifically includes:
receiving, by using the virtual receiver 1104, storage address information that is of the graphics instruction data and is sent by the virtual client process; and
obtaining the graphics instruction data from the shared memory according to the storage address information of the graphics instruction data.

In an optional implementation manner, the virtual rendering server and the virtual client process are virtual machines that run on a same physical machine.

The virtual processor 1101 is further configured to create the shared memory on the physical machine through negotiation with the virtual client process, and generate a mapping address of the shared memory.

The obtaining, by the virtual processor 1101, the graphics instruction data from the shared memory according to the storage address information of the graphics instruction data specifically includes: accessing the shared memory according to the mapping address of the shared memory.

In an optional implementation manner, that the virtual processor 1101 creates the shared memory on the physical machine through negotiation with the virtual client process, and generates a mapping address of the shared memory specifically includes:
obtaining a system address of the shared memory; and
mapping the obtained system address of the shared memory to process address space of the virtual rendering server, to obtain the mapping address of the shared memory.

The virtual rendering server in this embodiment of the present invention includes a virtual processor, a virtual memory, a virtual transmitter, and a virtual receiver. The virtual rendering server may create a shared memory through negotiation with a virtual client process. The virtual processor may obtain graphics instruction data sent by the virtual client process, perform rendering processing on the graphics instruction data to obtain target display data, store the target display data into the shared memory, and generate storage address information of the target display data. The virtual transmitter sends the storage address information of the target display data to the virtual client process, so that the virtual client process obtains the target display data from the shared memory according to the storage address information of the target display data. By using this embodiment of the present invention, only the storage address information of the target display data or storage address information of the graphics instruction data needs to be transmitted between the virtual client process and the virtual rendering server. In this way, the target display data or the graphics instruction data may be obtained from the shared memory; the graphics instruction data does not need to be directly transmitted through a network transmission channel between the virtual client process and the virtual rendering server, or display image data does not need to be directly transmitted through a network transmission channel between the virtual client process and the virtual rendering server. This shortens a transmission delay, decreases bandwidth of the transmission channel, and improves graphics processing performance.

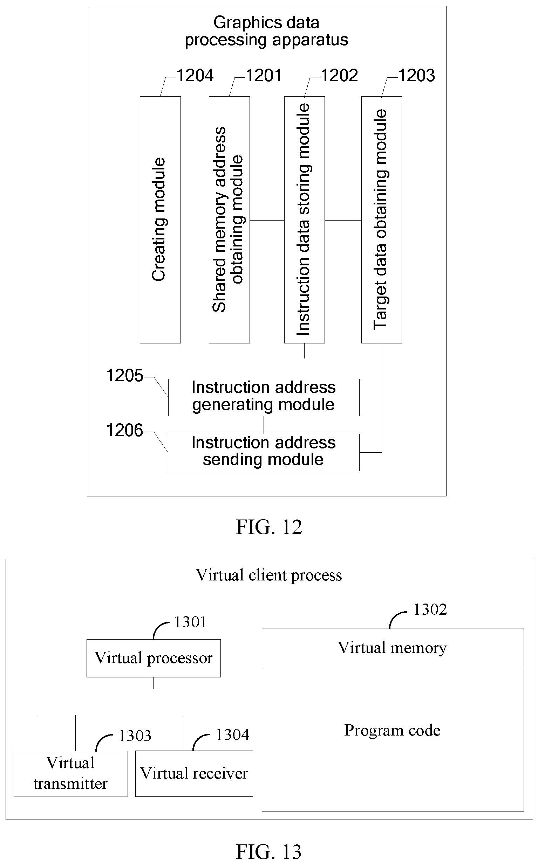

It should be noted that, a graphics data processing apparatus shown in FIG. 12 is used to execute the method in the embodiment of the present invention shown in FIG. 3, and is an execution body based on the graphics data processing method of FIG. 3. For ease of description, only parts related to the embodiments of the present invention are illustrated. For technical details that are not disclosed, refer to the embodiment of the present invention shown in FIG. 3.

FIG. 12 is a schematic structural diagram of a graphics data processing apparatus according to a third embodiment of the present invention. The graphics data processing apparatus provided by this embodiment of the present invention may include a virtual client process, where the virtual client process may include a shared memory address obtaining module 1201, an instruction data storing module 1202, and a target data obtaining module 1203.

The shared memory address obtaining module 1201 is configured to obtain a mapping address of a shared memory, where the shared memory is a memory that is created by the virtual client process and a virtual rendering server through negotiation.

In an optional implementation manner, the shared memory address obtaining module 1201 obtains the mapping address of the shared memory, where the shared memory is a memory that is created by the virtual client process and the virtual rendering server through negotiation, and the virtual client process and the virtual rendering server are virtual machines that run on a same physical machine. Specifically, the mapping address of the shared memory may be as follows: The virtual client process creates the shared memory on the physical machine through negotiation with the virtual rendering server, and generates the mapping address of the shared memory.

The instruction data storing module 1202 is configured to: when graphics instruction data is obtained, store the obtained graphics instruction data into the shared memory according to the mapping address that is of the shared memory and is obtained by the shared memory address obtaining module 1201, so that the virtual rendering server obtains the graphics instruction data from the shared memory to perform rendering processing.

In an optional implementation manner, when the graphics instruction data is obtained, the instruction data storing module 1202 stores the received graphics instruction data into the shared memory according to the mapping address of the shared memory, so that the virtual rendering server obtains the graphics instruction data from the shared memory to perform rendering processing. Specifically, when the virtual client process receives an instruction that is input from a thin terminal, the instruction that is input at the user end triggers an application program in the virtual client process to generate the graphics instruction data. Then the virtual client process obtains the graphics instruction data, for example, the virtual client process may intercept a 3D instruction by using an Opengl ICD driver.

The target data obtaining module 1203 is configured to obtain target display data that is obtained by the rendering server by performing rendering processing on the graphics instruction data.

In an optional implementation manner, the target data obtaining module 1203 obtains the target display data that is obtained by the rendering server by performing rendering processing on the graphics instruction data, decompresses the target display data to obtain graphics display data, and sends the graphics display data to the thin terminal, so that the thin terminal displays the graphics display data.

In an optional implementation manner, the target data obtaining module 1203 may include a data address receiving unit and a target data obtaining unit.

The data address receiving unit is configured to receive storage address information that is of the target display data and is sent by the virtual rendering server, where the storage address information of the target display data is storage address information of target display data that is generated by storing, by the virtual rendering server, the target display data into the shared memory.

The target data obtaining unit is configured to obtain the target display data from the shared memory according to the storage address information that is of the target display data and is received by the data address receiving unit.

Further, optionally, that the data address receiving unit receives storage address information that is of the target display data and is sent by the virtual rendering server may include:
receiving a data notification message sent by the virtual rendering server, where the data notification message carries the storage address information of the target display data; or
when sending a data obtaining request to the virtual rendering server, receiving an address response message that is returned by the virtual rendering server according to an address obtaining request, where the address response message carries the storage address information of the target display data.

In an optional implementation manner, that the virtual client process obtains the target display data that is obtained by the rendering server by performing rendering processing on the graphics instruction data may be: the virtual client process receives the target display data that is directly sent by the virtual rendering server through a network transmission channel.

Further, optionally, the virtual client process provided by this embodiment of the present invention may further include a creating module 1204.

The creating module 1204 is configured to create the shared memory on a physical machine through negotiation with the virtual rendering server, and generate the mapping address of the shared memory.

In an optional implementation manner, the creating module 1204 creates the shared memory on the physical machine through negotiation with the virtual rendering server. Specifically, a memory is applied for in the physical machine and is used as the shared memory. The virtual rendering server obtains a system address of the shared memory. Then the virtual rendering server maps the obtained system address of the shared memory to process address space of the virtual rendering server, to obtain the mapping address of the shared memory, and further generates the mapping address of the shared memory.

In an optional implementation manner, the creating module 1204 may include a system address obtaining unit and a mapping unit, where:
the system address obtaining unit is configured to obtain the system address of the shared memory; and
the mapping unit is configured to map the system address that is of the shared memory and is obtained by the system address obtaining unit to process address space of the virtual client process, to obtain the mapping address of the shared memory.

The system address of the shared memory is an absolute physical address of an operating system, that is, the virtual rendering server cannot directly access the system address of the shared memory. The virtual rendering server may map the system address of the shared memory to the process address space of the virtual rendering server, for example, a register of the virtual rendering server. The virtual rendering server may directly access the mapping address of the shared memory, so that the virtual rendering server may access the shared memory according to the mapping address of the shared memory, thereby reading data from or writing data into the shared memory.

Further, optionally, the virtual client process provided by this embodiment of the present invention may further include an instruction address generating module 1205 and an instruction address sending module 1206, where:
the instruction address generating module 1205 is configured to generate storage address information of the graphics instruction data; and
the instruction address sending module 1206 is configured to send, to the virtual rendering server, the storage address information that is of the graphics instruction data and is generated by the instruction address generating module 1205, so that the virtual rendering server obtains, according to the storage address information of the graphics instruction data, the graphics instruction data from the shared memory to perform rendering processing.

Further, optionally, that the instruction address sending module 1206 sends the storage address information of the graphics instruction data to the virtual rendering server may specifically include:
sending an instruction notification message to the virtual rendering server, where the instruction notification message carries the storage address information of the graphics instruction data; or
when an address obtaining request sent by the virtual rendering server is received, sending an address response message to the virtual rendering server according to the address obtaining request, where the address response message carries the storage address information of the graphics instruction data.

The graphics data processing apparatus provided by this embodiment of the present invention includes a virtual client process, where the virtual client process may include a shared memory address obtaining module, an instruction data storing module, and a target data obtaining module. The virtual client process may create a shared memory through negotiation with a virtual rendering server. The shared memory address obtaining module obtains a mapping address of the shared memory. When graphics instruction data is obtained, the virtual client process stores the obtained graphics instruction data into the shared memory according to the obtained mapping address of the shared memory, so that the virtual rendering server may obtain the graphics instruction data from the shared memory and perform rendering processing to obtain target display data. The target data obtaining module receives the target display data sent by the virtual rendering server. The virtual rendering server may send storage address information of the target display data to the virtual client process, so that the virtual client process may obtain the target display data from the shared memory according to the storage address information of the target display data, or the virtual rendering server may send the target display data to the virtual client process through a network transmission channel. By using this embodiment of the present invention, only storage address information of the graphics instruction data or the storage address information of the target display data needs to be transmitted between the virtual client process and the virtual rendering server. In this way, the graphics instruction data or the target display data may be obtained from the shared memory; the graphics instruction data does not need to be transmitted through the network transmission channel between the virtual client process and the virtual rendering server, or the target display data does not need to be transmitted through the network transmission channel between the virtual client process and the virtual rendering server. This shortens a transmission delay, decreases bandwidth of the transmission channel, and improves graphics processing performance.

FIG. 13 is a schematic structural diagram of a virtual client process according to an embodiment of the present invention. The virtual client process provided by this embodiment corresponds to the graphics data processing method shown in FIG. 3, and is an execution body based on the graphics data processing method shown in FIG. 3. FIG. 13 shows a specific implementation form, where the virtual client process includes a virtual processor 1301, a virtual memory 1302, a virtual transmitter 1303, and a virtual receiver 1304. The virtual memory 1302 is configured to store program code. The virtual processor 1301 is configured to execute the program code stored in the virtual memory 1302. In this embodiment of the present invention, the virtual memory 1302 stores program code and the virtual processor 1301 is configured to execute the program code:
obtaining a mapping address of a shared memory, where the shared memory is a memory that is created by the virtual client process and a virtual rendering server through negotiation;
when graphics instruction data is obtained, storing the obtained graphics instruction data into the shared memory according to the obtained mapping address of the shared memory, so that the virtual rendering server obtains the graphics instruction data from the shared memory to perform rendering processing; and
obtaining target display data that is obtained by the rendering server by performing rendering processing on the graphics instruction data.

In an optional implementation manner, the virtual client process and the virtual rendering server are virtual machines that run on a same physical machine.

The obtaining, by the virtual processor 1301, a mapping address of a shared memory specifically includes: creating the shared memory through negotiation with the virtual rendering server, and generating the mapping address of the shared memory.

In an optional implementation manner, the creating, by the virtual processor 1301, the shared memory through negotiation with the virtual rendering server, and generating the mapping address of the shared memory specifically includes:
obtaining a system address of the shared memory; and
mapping the obtained system address of the shared memory to process address space of the virtual client process, to obtain the mapping address of the shared memory.

In an optional implementation manner, after the storing, by the virtual processor 1301, the obtained graphics instruction data into the shared memory according to the obtained mapping address of the shared memory, the virtual processor 1301 is further configured to:
generate storage address information of the graphics instruction data; and
send, by using the virtual transmitter 1303, the storage address information of the graphics instruction data to the virtual rendering server, so that the virtual rendering server obtains, according to the storage address information of the graphics instruction data, the graphics instruction data from the shared memory to perform rendering processing.

In an optional implementation manner, the obtaining, by the virtual processor 1301, target display data that is obtained by the rendering server by performing rendering processing on the graphics instruction data includes:
receiving, by using the virtual receiver 1304, storage address information that is of the target display data and is sent by the virtual rendering server, where the storage address information of the target display data is storage address information of target display data that is generated by storing, by the virtual rendering server, the target display data into the shared memory; and
obtaining the target display data from the shared memory according to the storage address information of the target display data.

The virtual client process in this embodiment of the present invention includes a virtual processor, a virtual memory, a virtual transmitter, and a virtual receiver. The virtual client process may create a shared memory through negotiation with a virtual rendering server. The virtual processor may obtain a mapping address of the shared memory and, when graphics instruction data is obtained, store the obtained graphics instruction data into the shared memory according to the mapping address of the shared memory, so that the virtual rendering server may obtain the graphics instruction data from the shared memory and perform rendering processing to obtain target display data. In this way, the virtual client process may obtain the target display data that is obtained by the rendering server by performing rendering processing on the graphics instruction data. By using this embodiment of the present invention, only storage address information of the graphics instruction data or storage address information of the target display data needs to be transmitted between the virtual client process and the virtual rendering server. In this way, the graphics instruction data or the target display data may be obtained from the shared memory; the graphics instruction data does not need to be directly transmitted through a network transmission channel between the virtual client process and the virtual rendering server, or the target display data does not need to be directly transmitted through a network transmission channel between the virtual client process and the virtual rendering server. This shortens a transmission delay, decreases bandwidth of the transmission channel, and improves graphics processing performance.

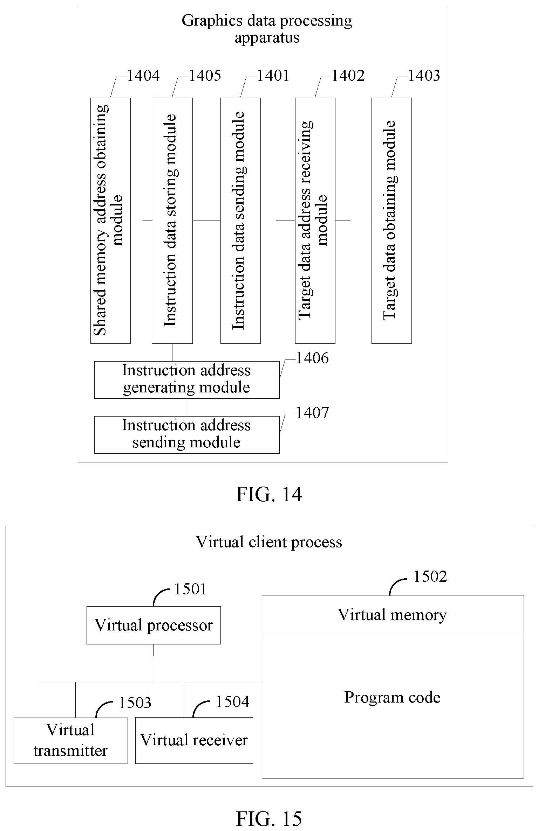

It should be noted that, a graphics data processing apparatus shown in FIG. 14 is used to execute the method in the embodiment of the present invention shown in FIG. 4, and is an execution body based on the graphics data processing method of FIG. 4. For ease of description, only parts related to the embodiments of the present invention are illustrated. For technical details that are not disclosed, refer to the embodiment of the present invention shown in FIG. 4.

FIG. 14 is a schematic structural diagram of a graphics data processing apparatus according to a fourth embodiment of the present invention. The graphics data processing apparatus provided by this embodiment of the present invention may include a virtual client process, where the virtual client process may include an instruction data sending module 1401, a target data address receiving module 1402, and a target data obtaining module 1403.

The instruction data sending module 1401 is configured to send graphics instruction data to a virtual rendering server, so that the virtual rendering server performs rendering on the graphics instruction data to obtain target display data.

In an optional implementation manner, the instruction data sending module 1401 may send a storage address of the graphics instruction data to the virtual rendering server, so that the virtual rendering server obtains, according to the storage address of the graphics instruction data, the graphics instruction data from a shared memory to perform rendering processing. Further, optionally, that the instruction data sending module 1401 sends graphics instruction data to a virtual rendering server may be: the virtual client process directly sends the graphics instruction data to the virtual rendering server through a network transmission channel.

The target data address receiving module 1402 is configured to receive storage address information that is of the target display data and is sent by the virtual rendering server.

In an optional implementation manner, the target data address receiving module 1402 receives the storage address information that is of the target display data and is sent by the virtual rendering server. Further, optionally, that the target data address receiving module 1402 receives storage address information that is of the target display data and is sent by the virtual rendering server may specifically include:
receiving a data notification message sent by the virtual rendering server, where the data notification message carries the storage address information of the target display data; or
when sending a data obtaining request to the virtual rendering server, receiving an address response message that is returned by the virtual rendering server according to an address obtaining request, where the address response message carries the storage address information of the target display data.

The target data obtaining module 1403 is configured to obtain the target display data from the shared memory according to the storage address information that is of the target display data and is received by the target data address receiving module 1402, where the target display data is obtained by the virtual rendering server by performing rendering processing on the graphics instruction data, and the shared memory is a memory that is created by the virtual client process and the virtual rendering server through negotiation.

In an optional implementation manner, the target data obtaining module 1403 obtains the target display data from the shared memory according to the storage address information of the target display data, where the target display data is obtained by the virtual rendering server by performing rendering processing on the graphics instruction data. The virtual client process decompresses the target display data to obtain graphics display data and sends the graphics display data to a thin terminal, so that the thin terminal displays the graphics display data.

Further, optionally, the virtual client process provided by this embodiment of the present invention may further include a shared memory address obtaining module 1404 and an instruction data storing module 1405.

The shared memory address obtaining module 1404 is configured to obtain a mapping address of the shared memory.

In an optional implementation manner, the shared memory address obtaining module 1404 is specifically configured to create the shared memory on a physical machine through negotiation with the virtual rendering server, and generate the mapping address of the shared memory. Further, optionally, the shared memory address obtaining module 1404 may include a system address obtaining unit and a mapping unit.

The system address obtaining unit is configured to obtain a system address of the shared memory.

The mapping unit is configured to map the system address that is of the shared memory and is obtained by the system address obtaining unit to process address space of the virtual client process, to obtain the mapping address of the shared memory.

In an optional implementation manner, the virtual client process creates the shared memory on a physical machine through negotiation with the virtual rendering server. Specifically, a memory is applied for in the physical machine and is used as the shared memory. The virtual rendering server obtains the system address of the shared memory. Then the virtual rendering server maps the obtained system address of the shared memory to process address space of the virtual rendering server, to obtain the mapping address of the shared memory, and further generates the mapping address of the shared memory. The system address of the shared memory is an absolute physical address of an operating system, that is, the virtual rendering server cannot directly access the system address of the shared memory. The virtual rendering server may map the system address of the shared memory to the process address space of the virtual rendering server, for example, a register of the virtual rendering server. The virtual rendering server may directly access the mapping address of the shared memory, so that the virtual rendering server may access the shared memory according to the mapping address of the shared memory, thereby reading data from or writing data into the shared memory.

The instruction data storing module 1405 is configured to: when the graphics instruction data is obtained, store the obtained graphics instruction data into the shared memory according to the mapping address that is of the shared memory and is obtained by the shared memory address obtaining module 1404, so that the virtual rendering server obtains the graphics instruction data from the shared memory to perform rendering processing.

In an optional implementation manner, when the virtual client process receives an instruction that is input from the thin terminal, the instruction that is input at the user end triggers an application program in the virtual client process to generate the graphics instruction data. Then the virtual client process obtains the graphics instruction data, for example, the virtual client process may intercept a 3D instruction by using an Opengl ICD driver. The instruction data storing module 1405 stores the received graphics instruction data into the shared memory according to the mapping address that is of the shared memory and is obtained by the shared memory address obtaining module 1404, so that the virtual rendering server obtains the graphics instruction data from the shared memory to perform rendering processing.

Further, optionally, the virtual client process provided by this embodiment of the present invention may further include an instruction address generating module 1406 and an instruction address sending module 1407.

The instruction address generating module 1406 is configured to generate storage address information of the graphics instruction data.

The instruction address sending module 1407 is configured to send, to the virtual rendering server, the storage address information that is of the graphics instruction data and is generated by the instruction address generating module 1406, so that the virtual rendering server obtains, according to the storage address information of the graphics instruction data, the graphics instruction data from the shared memory to perform rendering processing.

Further, optionally, that the instruction address sending module 1407 sends the storage address information of the graphics instruction data to the virtual rendering server may include:
sending an instruction notification message to the virtual rendering server, where the instruction notification message carries the storage address information of the graphics instruction data; or
when an address obtaining request sent by the virtual rendering server is received, sending an address response message to the virtual rendering server according to the address obtaining request, where the address response message carries the storage address information of the graphics instruction data.

The graphics data processing apparatus provided by this embodiment of the present invention includes a virtual client process, where the virtual client process may include an instruction data sending module, a target data address receiving module, and a target data obtaining module. The virtual client process creates a shared memory through negotiation with a virtual rendering server. The instruction data sending module sends graphics instruction data to the virtual rendering server, so that the virtual rendering server performs rendering on the graphics instruction data to obtain target display data. The target data address receiving module receives storage address information that is of the target display data and is sent by the virtual rendering server. The target data obtaining module obtains the target display data from the shared memory according to the storage address information of the target display data. The virtual client process may send storage address information of the graphics instruction data to the virtual rendering server, so that the virtual rendering server may obtain graphics data from the shared memory according to the storage address information of the graphics instruction data, or the virtual client process directly transmits the graphics instruction data to the virtual rendering server through a network transmission channel. By using this embodiment of the present invention, only the storage address information of the target display data or the storage address information of the graphics instruction data needs to be transmitted between the virtual client process and the virtual rendering server. In this way, the target display data or the graphics instruction data may be obtained from the shared memory; the graphics instruction data does not need to be directly transmitted through the network transmission channel between the virtual client process and the virtual rendering server, or display image data does not need to be directly transmitted through the network transmission channel between the virtual client process and the virtual rendering server. This shortens a transmission delay, decreases bandwidth of the transmission channel, and improves graphics processing performance.

FIG. 15 is a schematic structural diagram of another virtual client process according to an embodiment of the present invention. The virtual client process provided by this embodiment corresponds to the graphics data processing method shown in FIG. 4, and is an execution body based on the graphics data processing method shown in FIG. 4. FIG. 15 shows a specific implementation form, where the virtual client process includes a virtual processor 1501, a virtual memory 1502, a virtual transmitter 1503, and a virtual receiver 1504. The virtual memory 1502 is configured to store program code. The virtual processor 1501 is configured to execute the program code stored in the virtual memory 1502. In this embodiment of the present invention, the virtual memory 1502 stores program code and the virtual processor 1501 is configured to execute the program code:
sending, by using the virtual transmitter 1503, graphics instruction data to a virtual rendering server, so that the virtual rendering server performs rendering on the graphics instruction data to obtain target display data;
receiving, by using the virtual receiver 1504, storage address information that is of the target display data and is sent by the virtual rendering server; and
obtaining the target display data from a shared memory according to the storage address information of the target display data, where the shared memory is a memory that is created by the virtual client process and the virtual rendering server through negotiation.

In an optional implementation manner, the sending, by the virtual processor 1501 by using the virtual transmitter 1503, graphics instruction data to a virtual rendering server specifically includes:
obtaining a mapping address of the shared memory; and
when the graphics instruction data is obtained, storing the obtained graphics instruction data into the shared memory according to the obtained mapping address of the shared memory, so that the virtual rendering server obtains the graphics instruction data from the shared memory to perform rendering processing.

In an optional implementation manner, the virtual client process and the virtual rendering server are virtual machines that run on a same physical machine.

The virtual processor 1501 is further configured to create the shared memory on the physical machine through negotiation with the virtual rendering server, and generate the mapping address of the shared memory.

In an optional implementation manner, that the virtual processor 1501 creates the shared memory on the physical machine through negotiation with the virtual rendering server, and generates the mapping address of the shared memory specifically includes:
obtaining a system address of the shared memory; and
mapping the obtained system address of the shared memory to process address space of the virtual client process, to obtain the mapping address of the shared memory.

In an optional implementation manner, after the storing, by the virtual processor 1501, the received graphics instruction data into the shared memory according to the obtained mapping address of the shared memory, the virtual processor 1501 is further configured to: generate storage address information of the graphics instruction data; and send the storage address information of the graphics instruction data to the virtual rendering server, so that the virtual rendering server obtains, according to the storage address information of the graphics instruction data, the graphics instruction data from the shared memory to perform rendering processing.

The virtual client process in this embodiment of the present invention includes a virtual processor, a virtual memory, a virtual transmitter, and a virtual receiver. The virtual client process may create a shared memory through negotiation with a virtual rendering server. The virtual transmitter sends graphics instruction data to the virtual rendering server, so that the virtual rendering server performs rendering on the graphics instruction data to obtain target display data. The virtual receiver receives storage address information that is of the target display data and is sent by the virtual rendering server. The virtual processor obtains the target display data from the shared memory according to the storage address information of the target display data. By using this embodiment of the present invention, only the storage address information of the target display data or storage address information of the graphics instruction data needs to be transmitted between the virtual client process and the virtual rendering server. In this way, the target display data or the graphics instruction data may be obtained from the shared memory; the graphics instruction data does not need to be directly transmitted through a network transmission channel between the virtual client process and the virtual rendering server, or display image data does not need to be directly transmitted through a network transmission channel between the virtual client process and the virtual rendering server. This shortens a transmission delay, decreases bandwidth of the transmission channel, and improves graphics processing performance.

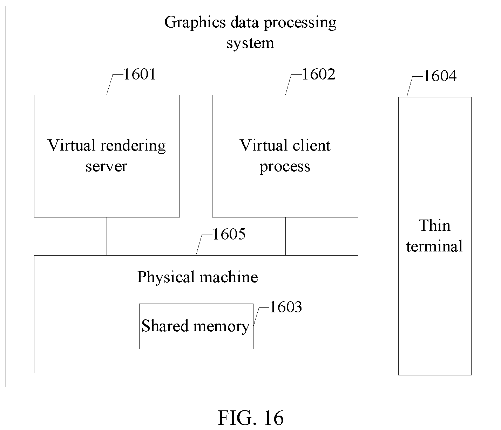

FIG. 16 is a schematic structural diagram of a graphics data processing system according to an embodiment of the present invention. As shown in the figure, the graphics data processing system provided by this embodiment of the present invention may include a virtual rendering server 1601, a virtual client process 1602, and a shared memory 1603 that is created by the virtual rendering server 1601 and the virtual client process 1602 through negotiation.

Further, optionally, the graphics data processing system provided by this embodiment of the present invention may further include a thin terminal 1604 and a physical machine 1605, where the virtual rendering server 1601 and the virtual client process 1602 are virtual machines that run on the same physical machine 1605. The virtual rendering server 1601 and the virtual client process 1602 create the shared memory 1603 on the physical machine 1605 through negotiation.

In an optional implementation manner, the virtual rendering server 1601 may be the apparatus shown in FIG. 8, and the virtual client process 1602 may be the apparatus shown in FIG. 12. For a structure and a function of the apparatuses, refer to related descriptions in the embodiments shown in FIG. 8 and FIG. 12, which are not described herein again. It should be noted that, the system in this embodiment may be applied to the foregoing methods.

In an optional implementation manner, the virtual rendering server 1601 may be the apparatus shown in FIG. 10, and the virtual client process 1602 may be the apparatus shown in FIG. 14. For a structure and a function of the apparatuses, refer to related descriptions in the embodiments shown in FIG. 10 and FIG. 14, which are not described herein again. It should be noted that, the system in this embodiment may be applied to the foregoing method.

In conclusion, the embodiments of the present invention provide a graphics data processing method, apparatus, and system. A virtual client process and a virtual rendering server may create a shared memory through negotiation. The virtual client process may send storage address information of graphics instruction data to the virtual rendering server, so that the virtual rendering server may obtain the graphics instruction data from the shared memory according to the storage address information of the graphics instruction data. The virtual rendering server may further send storage address information of target display data to the virtual client process, so that the virtual client process may obtain the target display data from the shared memory according to the storage address information of the target display data. In this way, the graphics instruction data or the target display data or both do not need to be directly transmitted through a network transmission channel between the virtual client process and the virtual rendering server. This shortens a transmission delay, decreases bandwidth of the transmission channel, and improves graphics processing performance.

In the several embodiments provided in the present application, it should be understood that the disclosed apparatus and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses, modules, or units may be implemented in electronic, mechanical, or other forms.

The modules or units described as separate parts may or may not be physically separate, and parts displayed as modules or units may or may not be physical modules or units, may be located in one position, or may be distributed on a plurality of network modules or units. A part or all of the modules or units may be selected according to actual needs to achieve the objectives of the solutions of the embodiments.

In addition, functional modules or units in the embodiments of the present invention may be integrated into one processing module or unit, or each of the modules or units may exist alone physically, or two or more modules or units are integrated into one module or unit. The integrated modules or units may be implemented in a form of hardware, or may be implemented in a form of a software functional unit.

When the integrated module or unit is implemented in the form of a software functional module or unit and sold or used as an independent product, the integrated module or unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention as claimed. Any equivalent modification or replacement readily figured out by a person skilled in the art within the technical scope of the present invention shall fall within the protection scope of the present invention as claimed. Therefore, the protection scope of the present application shall be subject to the protection scope of the claims.

## Claims

1. A graphics data processing method, wherein the method comprises:
obtaining, by a virtual rendering server, a system address of a shared memory, wherein the system address is a physical address, the shared memory is a memory of a physical machine and is created by the virtual client process and the virtual rendering server through negotiation, the virtual rendering server and the virtual client process are virtual machines that run on the physical machine;
mapping, by the virtual rendering server, the obtained system address of the shared memory to process address space of the virtual rendering server, to obtain a mapping address of the shared memory; receiving (S101), by the virtual rendering server, storage address information that is of graphics instruction data and is sent by the virtual client process, wherein the graphics instruction data is stored in the shared memory by the virtual client process;
accessing, by the virtual rendering server, the shared memory according to the mapping address of the shared memory, and obtaining (S102), the graphics instruction data from the shared memory according to the storage address information of the graphics instruction data; and performing (S103), by the virtual rendering server, rendering processing on the obtained graphics instruction data to obtain target display data, and sending the target display data to the virtual client process, wherein the target display data is graphics data

2. The method according to claim 1, wherein the sending the target display data to the virtual client process comprises:
storing, by the virtual rendering server, the target display data into the shared memory, and generating storage address information of the target display data; and
sending, by the virtual rendering server, the storage address information of the target display data to the virtual client process, so that the virtual client process obtains the target display data from the shared memory according to the storage address information of the target display data.

3. A graphics data processing method, wherein the method comprises:
obtaining, by a virtual client process, a system address of a shared memory, wherein the system address is a physical address, the shared memory is a memory of a physical machine and is created by the virtual client process and a virtual rendering server through negotiation, the virtual client process and the virtual rendering server are virtual machines that run on the physical machine;
mapping, by the virtual client process, the obtained system address of the shared memory to process address space of the virtual client process, to obtain (S301) a mapping address of the shared memory, ;
when graphics instruction data is obtained (S302), storing, by the virtual client process, the obtained graphics instruction data into the shared memory according to the obtained mapping address of the shared memory, so that the virtual rendering server obtains the graphics instruction data from the shared memory to perform rendering processing; and obtaining (S303), by the virtual client process, target display data that is obtained by the virtual rendering server by performing rendering processing on the graphics instruction data, wherein the target display data is graphics data.

4. The method according to claim 3, wherein after the storing, by the virtual client process, the obtained graphics instruction data into the shared memory according to the obtained mapping address of the shared memory, the method comprises:
generating, by the virtual client process, storage address information of the graphics instruction data; and
sending, by the virtual client process, the storage address information of the graphics instruction data to the virtual rendering server, so that the virtual rendering server obtains, according to the storage address information of the graphics instruction data, the graphics instruction data from the shared memory to perform rendering processing.

5. The method according to claim 3, wherein the obtaining, by the virtual client process, target display data that is obtained by the rendering server by performing rendering processing on the graphics instruction data comprises:
receiving, by the virtual client process, storage address information that is of the target display data and is sent by the virtual rendering server, wherein the storage address information of the target display data is storage address information of target display data that is generated by storing, by the virtual rendering server, the target display data into the shared memory; and
obtaining, by the virtual client process, the target display data from the shared memory according to the storage address information of the target display data.

6. A graphics data processing apparatus, **characterized in that** the apparatus comprises a virtual rendering server, wherein the virtual rendering server comprises an instruction address receiving module (801), an instruction data obtaining module (802), a data processing module (803), a system address obtaining unit and a mapping unit;
a system address obtaining unit, configured to obtain a system address of a shared memory, wherein the system address is a physical address, the shared memory is a memory of a physical machine and is created by a virtual client process and the virtual rendering server through negotiation, the virtual rendering server and the virtual client process are virtual machines that run on the physical machine;
a mapping unit, configured to map the system address that is of the shared memory and is obtained by the system address obtaining unit to process address space of the virtual rendering server, to obtain the mapping address of the shared memory;
the instruction address receiving module (801) is configured to receive storage address information that is of graphics instruction data and is sent by the virtual client process, wherein the graphics instruction data is stored in the shared memory by the virtual client process;
the instruction data obtaining module (802) is configured to access the shared memory according to the mapping address of the shared memory and obtain the graphics instruction data from the shared memory according to the storage address information that is of the graphics instruction data and is received by the instruction address receiving module (801); and
the data processing module (803) is configured to perform rendering processing on the graphics instruction data obtained by the instruction data obtaining module (802) to obtain target display data, and send the target display data to the virtual client process, wherein the target display data is graphics data.

7. The apparatus according to claim 6, wherein the data processing module (803) comprises:
a target data storing unit, configured to store the target display data into the shared memory, and generate storage address information of the target display data; and
a target data address sending unit, configured to send the storage address information of the target display data to the virtual client process, so that the virtual client process obtains the target display data from the shared memory according to the storage address information of the target display data.

8. A graphics data processing apparatus, **characterized in that** the apparatus comprises a virtual client process, wherein the virtual client process comprises a shared memory address obtaining module (1201), an instruction data storing module (1202), a target data obtaining module (1203), a system address obtaining unit and a mapping unit;
a system address obtaining unit, configured to obtain a system address of the shared memory, wherein the system address is a physical address, the shared memory is a memory of a physical machine and is created by the virtual client process and a virtual rendering server through negotiation, the virtual client process and the virtual rendering server are virtual machines that run on the physical machine;
a mapping unit, configured to map the system address that is of the shared memory and is obtained by the system address obtaining unit to process address space of the virtual client process, to obtain the mapping address of the shared memory;
the shared memory address obtaining module (1201) is configured to obtain the mapping address of the shared memory;
the instruction data storing module (1202) is configured to: when graphics instruction data is obtained, store the obtained graphics instruction data into the shared memory according to the mapping address that is of the shared memory and is obtained by the shared memory address obtaining module (1201), so that the virtual rendering server obtains the graphics instruction data from the shared memory to perform rendering processing; and
the target data obtaining module (1203) is configured to obtain target display data that is obtained by the virtual rendering server by performing rendering processing on the graphics instruction data, wherein the target display data is graphics data.

9. The apparatus according to claim 8, wherein the virtual client process further comprises:
an instruction address generating module (1205), configured to generate storage address information of the graphics instruction data; and
an instruction address sending module (1206), configured to send, to the virtual rendering server, the storage address information that is of the graphics instruction data and is generated by the instruction address generating module (1205), so that the virtual rendering server obtains, according to the storage address information of the graphics instruction data, the graphics instruction data from the shared memory to perform rendering processing.

10. The apparatus according to claim 8, wherein the target data obtaining module comprises:
a data address receiving unit, configured to receive storage address information that is of the target display data and is sent by the virtual rendering server, wherein the storage address information of the target display data is storage address information of target display data that is generated by storing, by the virtual rendering server, the target display data into the shared memory; and
a target data obtaining unit, configured to obtain the target display data from the shared memory according to the storage address information that is of the target display data and is received by the data address receiving unit.

## Patentansprüche

1. Grafikdatenverarbeitungsverfahren, wobei das Verfahren Folgendes umfasst:
Erhalten, durch einen virtuellen Rendering-Server, einer Systemadresse eines geteilten Speichers, wobei die Systemadresse eine physische Adresse ist, wobei der geteilte Speicher ein Speicher einer physischen Maschine ist und durch den virtuellen Clientprozess und den virtuellen Rendering-Server durch Verhandeln erzeugt wird, wobei der virtuelle Rendering-Server und der virtuelle Clientprozess virtuelle Maschinen sind, die auf der physischen Maschine ablaufen;
Zuordnen, durch den virtuellen Rendering-Server, der erhaltenen Systemadresse des geteilten Speichers zu einem Prozessadressenraum des virtuellen Rendering-Servers, um eine Zuordnungsadresse des geteilten Speichers zu erhalten;
Empfangen (S101), durch den virtuellen Rendering-Server, von Speicheradresseninformationen, die von Grafikanweisungsdaten stammen und die vom virtuellen Clientprozess gesendet werden, wobei die Grafikanweisungsdaten vom virtuellen Clientprozess im geteilten Speicher gespeichert werden;
Zugreifen, durch den virtuellen Rendering-Server, auf den geteilten Speicher gemäß der Zuordnungsadresse des geteilten Speichers, und
Erhalten (S102) der Grafikanweisungsdaten vom geteilten Speicher gemäß den Speicheradresseninformationen der Grafikanweisungsdaten; und
Anwenden (S103), durch den virtuellen Rendering-Server, von Rendering-Verarbeitung auf die erhaltenen Grafikanweisungsdaten, um Zielanzeigedaten zu erhalten, und Senden der Zielanzeigedaten an den virtuellen Clientprozess, wobei die Zielanzeigedaten Grafikdaten sind.

2. Verfahren nach Anspruch 1, wobei das Senden der Zielanzeigedaten an den virtuellen Clientprozess Folgendes umfasst:
Speichern, durch den virtuellen Rendering-Server, der Zielanzeigedaten im geteilten Speicher und Erzeugen von Speicheradresseninformationen der Zielanzeigedaten; und
Senden, durch den virtuellen Rendering-Server, der Speicheradresseninformationen der Zielanzeigedaten an den virtuellen Clientprozess, so dass der virtuelle Clientprozess die Zielanzeigedaten vom geteilten Speicher gemäß den Speicheradresseninformationen der Zielanzeigedaten erhält.

3. Grafikdatenverarbeitungsverfahren, wobei das Verfahren Folgendes umfasst:
Erhalten, durch einen virtuellen Clientprozess, einer Systemadresse eines geteilten Speichers, wobei die Systemadresse eine physische Adresse ist, wobei der geteilte Speicher ein Speicher einer physischen Maschine ist und durch den virtuellen Clientprozess und einen virtuellen Rendering-Server durch Verhandeln erzeugt wird, wobei der virtuelle Clientprozess und der virtuelle Rendering-Server virtuelle Maschinen sind, die auf der physischen Maschine ablaufen;
Zuordnen, durch den virtuellen Clientprozess, der erhaltenen Systemadresse des geteilten Speichers zu einem Prozessadressenraum des virtuellen Clientprozesses, um eine Zuordnungsadresse des geteilten Speichers zu erhalten (S301);
wenn Grafikanweisungsdaten erhalten werden (S302), Speichern, durch den virtuellen Clientprozess, der erhaltenen Grafikanweisungsdaten im geteilten Speicher gemäß der erhaltenen Zuordnungsadresse des geteilten Speichers, so dass der virtuelle Rendering-Server die Grafikanweisungsdaten vom geteilten Speicher erhält, um Rendering-Verarbeitung anzuwenden; und
Erhalten (S303), durch den virtuellen Clientprozess, von Zielanzeigedaten, die vom virtuellen Rendering-Server durch Anwenden von Rendering-Verarbeitung auf die Grafikanweisungsdaten erhalten werden, wobei die Zielanzeigedaten Grafikdaten sind.

4. Verfahren nach Anspruch 3, wobei das Verfahren nach dem Speichern, durch den virtuellen Clientprozess, der erhaltenen Grafikanweisungsdaten im geteilten Speicher gemäß der erhaltenen Zuordnungsadresse des geteilten Speichers Folgendes umfasst:
Erzeugen, durch den virtuellen Clientprozess, von Speicheradresseninformationen der Grafikanweisungsdaten; und
Senden, durch den virtuellen Clientprozess, der Speicheradresseninformationen der Grafikanweisungsdaten an den virtuellen Rendering-Server, so dass der virtuelle Rendering-Server die Grafikanweisungsdaten gemäß den Speicheradresseninformationen der Grafikanweisungsdaten vom geteilten Speicher erhält, um Rendering-Verarbeitung anzuwenden.

5. Verfahren nach Anspruch 3, wobei das Erhalten, durch den virtuellen Clientprozess, von Zielanzeigedaten, die durch den Rendering-Server durch Anwenden von Rendering-Verarbeitung auf die Grafikanweisungsdaten erhalten werden, Folgendes umfasst:
Empfangen, durch den virtuellen Clientprozess, von Speicheradresseninformationen, die von den Zielanzeigedaten stammen und die vom virtuellen Rendering-Server gesendet werden, wobei die Speicheradresseninformationen der Zielanzeigedaten Speicheradresseninformationen von Zielanzeigedaten sind, die durch Speichern der Zielanzeigedaten, durch den virtuellen Rendering-Server, im geteilten Speicher erzeugt werden; und
Erhalten, durch den virtuellen Clientprozess, der Zielanzeigedaten vom geteilten Speicher gemäß den Speicheradresseninformationen der Zielanzeigedaten.

6. Grafikdatenverarbeitungseinrichtung, **dadurch gekennzeichnet, dass** die Einrichtung Folgendes umfasst:
einen virtuellen Rendering-Server, wobei der virtuelle Rendering-Server ein Anweisungsadressenempfangsmodul (801), ein Anweisungsdatenerhaltemodul (802), ein Datenverarbeitungsmodul (803), eine Systemadressenerhalteeinheit und eine Zuordnungseinheit umfasst;
eine Systemadressenerhalteeinheit, die zum Erhalten einer Systemadresse eines geteilten Speichers konfiguriert ist, wobei die Systemadresse eine physische Adresse ist, wobei der geteilte Speicher ein Speicher einer physischen Maschine ist und durch einen virtuellen Clientprozess und den virtuellen Rendering-Server durch Verhandeln erzeugt wird, wobei der virtuelle Rendering-Server und der virtuelle Clientprozess virtuelle Maschinen sind, die auf der physischen Maschine ablaufen;
eine Zuordnungseinheit, die zum Zuordnen der Systemadresse, die vom geteilten Speicher stammt und die von der Systemadressenerhalteeinheit erhalten wird, zu einem Prozessadressenraum des virtuellen Rendering-Servers, um die Zuordnungsadresse des geilten Speichers zu erhalten, konfiguriert ist;
wobei das Anweisungsadressenempfangsmodul (801) zum Empfangen von Speicheradresseninformationen, die von Grafikanweisungsdaten stammen und die vom virtuellen Clientprozess gesendet werden, konfiguriert ist, wobei die Grafikanweisungsdaten im geteilten Speicher durch den virtuellen Clientprozess gespeichert werden;
wobei das Anweisungsdatenerhaltemodul (802) zum Zugreifen auf den geteilten Speicher gemäß der Zuordnungsadresse des geteilten Speichers und zum Erhalten der Grafikanweisungsdaten vom geteilten Speicher gemäß den Speicheradresseninformationen, die von den Grafikanweisungsdaten stammen und die durch das Anweisungsadressenempfangsmodul (801) empfangen werden, konfiguriert ist; und
wobei das Datenverarbeitungsmodul (803) zum Anwenden von Rendering-Verarbeitung auf die Grafikanweisungsdaten, die durch das Anweisungsdatenerhaltemodul (802) erhalten werden, um Zielanzeigedaten zu erhalten, und zum Senden der Zielanzeigedaten an den virtuellen Clientprozess konfiguriert ist, wobei die Zielanzeigedaten Grafikdaten sind.

7. Einrichtung nach Anspruch 6, wobei das Datenverarbeitungsmodul (803) Folgendes umfasst:
eine Zieldatenspeichereinheit, die zum Speichern der Zielanzeigedaten im geteilten Speicher und zum Erzeugen von Speicheradresseninformationen der Zielanzeigedaten konfiguriert ist; und
eine Zieldatenadressensendeeinheit, die zum Senden der Speicheradresseninformationen der Zielanzeigedaten an den virtuellen Clientprozess, so dass der virtuelle Clientprozess die Zielanzeigedaten vom geteilten Speicher gemäß den Speicheradresseninformationen der Zielanzeigedaten erhält, konfiguriert ist.

8. Grafikdatenverarbeitungseinrichtung, **dadurch gekennzeichnet, dass** die Einrichtung Folgendes umfasst:
einen virtuellen Clientprozess, wobei der virtuelle Clientprozess ein Geteilter-Speicher-Adressenerhaltemodul (1201), ein Anweisungsdatenspeichermodul (1202), ein Zieldatenerhaltemodul (1203), eine Systemadressenerhalteeinheit und eine Zuordnungseinheit umfasst;
eine Systemadressenerhalteeinheit, die zum Erhalten einer Systemadresse des geteilten Speichers konfiguriert ist, wobei die Systemadresse eine physische Adresse ist, wobei der geteilte Speicher ein Speicher einer physischen Maschine ist und durch den virtuellen Clientprozess und einen virtuellen Rendering-Server durch Verhandeln erzeugt wird, wobei der virtuelle Clientprozess und der virtuelle Rendering-Server virtuelle Maschinen sind, die auf der physischen Maschine ablaufen;
eine Zuordnungseinheit, die zum Zuordnen der Systemadresse, die vom geteilten Speicher stammt und die durch die Systemadressenerhalteeinheit erhalten wird, zu einem Prozessadressenraum des virtuellen Clientprozesses, um die Zuordnungsadresse des geilten Speichers zu erhalten, konfiguriert ist;
wobei das Geteilter-Speicher-Adressenerhaltemodul (1201) zum Erhalten der Zuordnungsadresse des geteilten Speichers konfiguriert ist;
wobei das Anweisungsdatenspeichermodul (1202) zu Folgendem konfiguriert ist: wenn Grafikanweisungsdaten erhalten werden, Speichern der erhaltenen Grafikanweisungsdaten im geteilten Speicher gemäß der Zuordnungsadresse, die vom geteilten Speicher stammt und die durch das Geteilter-Speicher-Adressenerhaltemodul (1201) erhalten wird, so dass der virtuelle Rendering-Server die Grafikanweisungsdaten vom geteilten Speicher erhält, um eine Rendering-Verarbeitung anzuwenden; und
wobei das Zieldatenerhaltemodul (1203) zum Erhalten von Zielanzeigedaten, die durch den virtuellen Rendering-Server durch Anwenden von Rendering-Verarbeitung auf die Grafikanweisungsdaten erhalten werden, konfiguriert ist, wobei die Zielanzeigedaten Grafikdaten sind.

9. Einrichtung nach Anspruch 8, wobei der virtuelle Clientprozess ferner Folgendes umfasst:
ein Anweisungsadressenerzeugungsmodul (1205), das zum Erzeugen von Speicheradresseninformationen der Grafikanweisungsdaten konfiguriert ist; und
ein Anweisungsadressensendemodul (1206), das zum Senden der Speicheradresseninformationen, die von den Grafikanweisungsdaten stammen und die durch das Anweisungsadressenerzeugungsmodul (1205) erzeugt werden, an den virtuellen Rendering-Server, so dass der virtuelle Rendering-Server die Grafikanweisungsdaten vom geteilten Speicher gemäß den Speicheradresseninformationen der Grafikanweisungsdaten erhält, um eine Rendering-Verarbeitung anzuwenden, konfiguriert ist.

10. Einrichtung nach Anspruch 8, wobei das Zieldatenerhaltemodul Folgendes umfasst:
eine Datenadressenempfangseinheit, die zum Empfangen von Speicheradresseninformationen, die von den Zielanzeigedaten stammen und die vom virtuellen Rendering-Server gesendet werden, konfiguriert ist, wobei die Speicheradresseninformationen von den Zielanzeigedaten Speicheradresseninformationen von Zielanzeigedaten sind, die durch Speichern, durch den virtuellen Rendering-Server, der Zielanzeigedaten im geteilten Speicher erzeugt werden; und
eine Zieldatenerhalteeinheit, die zum Erhalten der Zielanzeigedaten vom geteilten Speicher gemäß den Speicheradresseninformationen, die von den Zielanzeigedaten stammen und die von der Datenadressenempfangseinheit empfangen werden, konfiguriert ist.

## Revendications

1. Procédé de traitement de données graphiques, le procédé comprenant :
l'obtention, par un serveur de rendu virtuel, d'une adresse système d'une mémoire partagée, l'adresse système constituant une adresse physique, la mémoire partagée constituant une mémoire d'une machine physique et étant créée par le processus client virtuel et le serveur de rendu virtuel par voie de négociation, le serveur de rendu virtuel et le processus client virtuel constituant des machines virtuelles qui tournent sur la machine physique ;
le mappage, par le serveur de rendu virtuel, de l'adresse système obtenue de la mémoire partagée vers un espace d'adresses de processus du serveur de rendu virtuel, en vue de l'obtention d'une adresse de mappage de la mémoire partagée ;
la réception (S101), par le serveur de rendu virtuel, d'informations d'adresse de stockage relatives à des données d'instruction graphique et envoyées par le processus client virtuel, les données d'instruction graphique étant stockées dans la mémoire partagée par le processus client virtuel ;
l'accès, par le serveur de rendu virtuel, à la mémoire partagée en accord avec l'adresse de mappage de la mémoire partagée, et l'obtention (S102) des données d'instruction graphique à partir de la mémoire partagée en accord avec les informations d'adresse de stockage relatives aux données d'instruction graphique ; et l'exécution (S103), par le serveur de rendu virtuel, d'un traitement de rendu sur les données d'instruction graphique obtenues en vue de l'obtention de données d'affichage cibles, et l'envoi des données d'affichage cibles au processus client virtuel, les données d'affichage cibles constituant des données graphiques.

2. Procédé selon la revendication 1, dans lequel l'envoi des données d'affichage cibles au processus client virtuel comprend :
le stockage, par le serveur de rendu virtuel, des données d'affichage cibles dans la mémoire partagée, et la génération d'informations d'adresse de stockage relatives aux données d'affichage cibles ; et
l'envoi, par le serveur de rendu virtuel, des informations d'adresse de stockage relatives aux données d'affichage cibles au processus client virtuel, pour faire en sorte que le processus client virtuel obtienne les données d'affichage cibles à partir de la mémoire partagée en accord avec les informations d'adresse de stockage relatives aux données d'affichage cibles.

3. Procédé de traitement de données graphiques, le procédé comprenant :
l'obtention, par un processus client virtuel, d'une adresse système d'une mémoire partagée, l'adresse système constituant une adresse physique, la mémoire partagée constituant une mémoire d'une machine physique et étant créée par le processus client virtuel et un serveur de rendu virtuel par voie de négociation, le processus client virtuel et le serveur de rendu virtuel constituant des machines virtuelles qui tournent sur la machine physique ;
le mappage, par le processus client virtuel, de l'adresse système obtenue de la mémoire partagée vers un espace d'adresses de processus du processus client virtuel, en vue de l'obtention (S301) d'une adresse de mappage de la mémoire partagée ;
à la suite de l'obtention (S302) de données d'instruction graphique, le stockage, par le processus client virtuel, des données d'instruction graphique obtenues dans la mémoire partagée en accord avec l'adresse de mappage obtenue de la mémoire partagée, pour faire en sorte que le serveur de rendu virtuel obtienne les données d'instruction graphique à partir de la mémoire partagée en vue de l'exécution d'un traitement de rendu ; et
l'obtention (S303), par le processus client virtuel, de données d'affichage cibles obtenues par le serveur de rendu virtuel par exécution d'un traitement de rendu sur les données d'instruction graphique, les données d'affichage cibles constituant des données graphiques.

4. Procédé selon la revendication 3, le procédé comprenant, suite au stockage, par le processus client virtuel, des données d'instruction graphique obtenues dans la mémoire partagée en accord avec l'adresse de stockage obtenue de la mémoire partagée :
la génération, par le processus client virtuel, d'informations d'adresse de stockage relatives aux données d'instruction graphique ; et
l'envoi, par le processus client virtuel, des informations d'adresse de stockage relatives aux données d'instruction graphique au serveur de rendu virtuel, pour faire en sorte que le serveur de rendu virtuel obtienne, en accord avec les informations de d'adresse de stockage relatives aux données d'instruction graphique, les données d'instruction graphique à partir de la mémoire partagée en vue de l'exécution d'un traitement de rendu.

5. Procédé selon la revendication 3, dans lequel l'obtention, par le processus client virtuel, de données d'affichage cibles obtenues par le serveur de rendu par exécution d'un traitement de rendu sur les données d'instruction graphique comprend :
la réception, par le processus client virtuel, d'informations d'adresse de stockage relatives aux données d'affichage cibles et envoyées par le serveur de rendu virtuel, les informations d'adresse de stockage relatives aux données d'affichage cibles constituant des informations d'adresse de stockage relatives à des données d'affichage cibles générées par stockage, par le serveur de rendu virtuel, des données d'affichage cibles dans la mémoire partagée ; et
l'obtention, par le processus client virtuel, des données d'affichage cibles à partir de la mémoire partagée en accord avec les informations d'adresse de stockage relatives aux données d'affichage cibles.

6. Appareil de traitement de données graphiques, l'appareil étant **caractérisé en ce qu'**il comprend un serveur de rendu virtuel, le serveur de rendu virtuel comprenant un module de réception d'adresse d'instruction (801), un module d'obtention de données d'instruction (802), un module de traitement de données (803), une unité d'obtention d'adresse système et une unité de mappage ;
une unité d'obtention d'adresse système, configurée pour obtenir une adresse système d'une mémoire partagée, l'adresse système constituant une adresse physique, la mémoire partagée constituant une mémoire d'une machine physique et étant créée par le processus client virtuel et le serveur de rendu virtuel par voie de négociation, le serveur de rendu virtuel et le processus client virtuel constituant des machines virtuelles qui tournent sur la machine physique ;
une unité de mappage, configurée pour mapper l'adresse système relative à la mémoire partagée et obtenue par l'unité d'obtention d'adresse système vers un espace d'adresses de processus du serveur de rendu virtuel, en vue d'obtenir l'adresse de mappage de la mémoire partagée ;
le module de réception d'adresse d'instruction (801) est configuré pour recevoir des informations d'adresse de stockage relatives à des données d'instruction graphique et envoyées par le processus client virtuel, les données d'instruction graphique étant stockées dans la mémoire partagée par le processus client virtuel ;
le module d'obtention de données d'instruction (802) est configuré pour accéder à la mémoire partagée en accord avec l'adresse de mappage de la mémoire partagée et obtenir les données d'instruction graphique à partir de la mémoire partagée en accord avec les informations d'adresse de stockage relatives aux données d'instruction graphique et reçues par le module de réception d'adresse d'instruction (801) ; et
le module de traitement de données (803) est configuré pour exécuter un traitement de rendu sur les données d'instruction graphique obtenues par le module d'obtention de données d'instruction (802) en vue d'obtenir des données d'affichage cibles, et envoyer les données d'affichage cibles au processus client virtuel, les données d'affichage cibles constituant des données graphiques.

7. Appareil selon la revendication 6, dans lequel le module de traitement de données (803) comprend :
une unité de stockage de données cibles, configurée pour stocker les données d'affichage cibles dans la mémoire partagée, et générer des informations d'adresse de stockage relatives aux données d'affichage cibles ; et
une unité d'envoi d'adresse de données cibles, configurée pour envoyer les informations d'adresse de stockage relatives aux données d'affichage cibles au processus client virtuel, pour faire en sorte que le processus client virtuel obtienne les données d'affichage cibles à partir de la mémoire partagée en accord avec les informations d'adresse de stockage relatives aux données d'affichage cibles.

8. Appareil de traitement de données graphiques, l'appareil étant **caractérisé en ce qu'**il comprend un processus client virtuel, le processus client virtuel comprenant un module d'obtention d'adresse de mémoire partagée (1201), un module de stockage de données d'instruction (1202), un module d'obtention de données cibles (1203), une unité d'obtention d'adresse système et une unité de mappage ;
une unité d'obtention d'adresse système, configurée pour obtenir une adresse système de la mémoire partagée, l'adresse système constituant une adresse physique, la mémoire partagée constituant une mémoire d'une machine physique et étant créée par le processus client virtuel et un serveur de rendu virtuel par voie de négociation, le processus client virtuel et le serveur de rendu virtuel constituant des machines virtuelles qui tournent sur la machine physique ;
une unité de mappage, configurée pour mapper l'adresse système relative à la mémoire partagée et obtenue par l'unité d'obtention d'adresse système vers un espace d'adresses de processus du processus client virtuel, en vue d'obtenir l'adresse de mappage de la mémoire partagée ;
le module d'obtention d'adresse de mémoire partagée (1201) est configuré pour obtenir l'adresse de mappage de la mémoire partagée ;
le module de stockage de données d'instruction (1202) est configuré pour : à la suite de l'obtention de données d'instruction graphique, stocker les données d'instruction graphique obtenues dans la mémoire partagée en accord avec l'adresse de mappage relative à la mémoire partagée et obtenue par le module d'obtention d'adresse de mémoire partagée (1201), pour faire en sorte que le serveur de rendu virtuel obtienne les données d'instruction graphique à partir de la mémoire partagée en vue d'exécuter un traitement de rendu ; et
le module d'obtention de données cibles (1203) est configuré pour obtenir des données d'affichage cibles obtenues par le serveur de rendu virtuel par exécution d'un traitement de rendu sur les données d'instruction graphique, les données d'affichage cibles constituant des données graphiques.

9. Appareil selon la revendication 8, dans lequel le processus client virtuel comprend en outre :
un module de génération d'adresse d'instruction (1205), configuré pour générer des informations d'adresse de stockage relatives aux données d'instruction graphique ; et
un module d'envoi d'adresse d'instruction (1206), configuré pour envoyer au serveur de rendu virtuel les informations d'adresse de stockage relatives aux données d'instruction graphique et générées par le module de génération d'adresse d'instruction (1205), pour faire en sorte que le serveur de rendu virtuel obtienne, en accord avec les informations d'adresse de stockage relatives aux données d'instruction graphique, les données d'instruction graphique à partir de la mémoire partagée en vue d'exécuter un traitement de rendu.

10. Appareil selon la revendication 8, dans lequel le module d'obtention de données cibles comprend :
une unité de réception d'adresse de données, configurée pour recevoir des informations d'adresse de stockage relatives aux données d'affichage cibles et envoyées par le serveur de rendu virtuel, les informations d'adresse de stockage relatives aux données d'affichage cibles constituant des informations d'adresse de stockage relatives à des données d'affichage cibles générées par stockage, par le serveur de rendu virtuel, des données d'affichage cibles dans la mémoire partagée ; et
une unité d'obtention de données cibles, configurée pour obtenir les données d'affichage cibles à partir de la mémoire partagée en accord avec les informations d'adresse de stockage relatives aux données d'affichage cibles et reçues par l'unité de réception d'adresse de données.
